# EUROPEAN PATENT SPECIFICATION

(11) **EP 1 307 018 B1**
(45) Date of publication and mention of the grant of the patent: **11.10.2006**
(21) Application number: 01125258.2
(22) Date of filing: 24.10.2001
(51) Int. Cl.: H04L 29/06

(54) **Load balancing unit and method of its operation**
Belastungsausgleichsgerät und sein Betriebsverfahren
Unité d'équilibrage de charge et méthode pour son fonctionnement

(43) Date of publication of application: 02.05.2003
(73) Proprietor: SUN MICROSYSTEMS, INC., Palo Alto, California 94303 (US)
(72) Inventor: Jahnke, Jörg, 22453 Hamburg (DE)
(74) Representative: Becker Kurig Straus

(56) References cited:
- WO-A-01/18641
- US-A- 5 987 621
- US-A- 6 128 279

## Description

### Field of the Invention

The invention relates generally to methods and devices for balancing the load in a network. Particularly, the invention relates to a processing server and associated load balancing unit and method of its operation, wherein each processing server of a processing server system includes a load balancing unit able to balance the processing load of the server system. The load balancing unit of one processing server balances the processing load wherein the load balancing units of the remaining processing servers may survey the operation and replace the active load balancing unit in case of a failure.

### Background of the Invention

Today's world can not be imagined without computers and especially computer networks. During the last decade the use of computers has changed from the use at a single isolated workstation to the use of computer services provided via computer networks, such as local area networks, wide area networks and a world wide computer network known as the internet. Services provided via computer networks may comprise e-mail services, content services like web services or database services, file transfer services and several other services. Several accessing possibilities to computers via computer networks are available such as dial up connections using mobile communication networks or dial up connections using phone lines to connect to a network provider. Network providers are service providers providing access to certain computer networks such as the internet.

A part of the internet is known as the world wide web (www) or just the web. The world wide web is a collection of content servers based on a mark-up language to code the content. Remote computers can access the content using corresponding clients which are able to decode the mark-up language to visualize the content. Usually, content servers of the world wide web are connected to the global public accessible internet but are also in operation as local content servers of non public institutions. The growing number of content servers in the web and the dramatic increase of users accessing the content servers have made it necessary to develop content server systems able to serve a high number of accesses at the same time or so called server systems with a high hit rate. A plurality of clients request data from the content servers at the same time.

Generally, even single highly performing content servers may be efficient enough to fulfil the task adequately. But the costs of single high performance servers do not scale proportionally with their serving performance. Therefore the task is split on several content servers, namely a server system, in order to operate a economical server system providing server services. A special interconnected means called load balancer or load balancing unit (L/B), respectively, distributes the requests of the clients over the single processing servers of the system in an appropriate way in order to enable a response to the client request within an acceptable period of time. In general, these load balancing units are separate computers comprising components to balance the processing load by distributing it onto the several connected processing servers.

Commonly, failure probability of the server system is low since a crash of a single processing server of the system can be compensated by a sufficient high number of single processing servers included in the server system, A tender spot of the reliability of the whole system is the load balancing unit. All client requests must be evaluated by the load balancing unit and links between client and processing server have to be established according to the client request by the load balancing unit. In case of a failure of the load balancing unit there is an imminent failure probability of the whole system.

In WO 0118641, a set of nodes (ARN) are arranged to distribute the bad on content servers by redirecting client request. Only one of those nodes, the master, is active. If the other nodes time out in their reception of keep alive, they choose a new master among themselves.

### Summary of the Invention

It is therefore desirable to provide a method, a device and system for improving the balancing of the processing load in a network.

A method for balancing a processing load in a network consisting of a plurality of processing servers each including a load balancing unit is provided. The load balancing units operate in two different operation modes. At least one of the load balancing unit carries out the balancing of the processing load in the network concerning the processing load of the plurality of the processing servers. This load balancing unit is in an active mode or termed as an active load balancing unit and the operation mode is described as active operation mode, respectively. The other remaining load balancing units are in a non-active operation mode or termed as a non-active load balancing units and are not involved in the balancing of the processing load in the network at this time. The active load balancing unit(s) carries out the balancing of the processing load and comprises receiving a client request, at an active load balancing unit, from a client, selecting, by the active load balancing unit, one of the plurality of processing server for processing or serving the client request and establishing a communication link between the client and the selected processing server to serve the client request.

By the term link or communication link or links in the following a communication of data comprising data of any kind is designated which uses analog or digital telephone lines, dedicated connection lines, digital subscriber lines (DSL), wireless communication links, like wireless local area network (WLAN) links, Bluetooth links , wireless links via a mobile communication system (GSM, UMTS, DCS etc.) or other than physical connections, such as virtual links which all do provide for adequate communication between two localized or delocalized communication sources, e.g. these can be two processing devices communicating via a network.

The communication link between the client and the selected processing server may be established by re-directing the client request to the selected processing server. The redirection of the client request may be performed by the active load balancing unit by generating a re-direction notification. The re-direction notification may contain instructions for the client to direct a following client request directly to the selected processing server. The re-direction notification may be transmitted to the client which transmitted the client request.

The active load balancing unit may authorize the client request or may authorize the establishment of the communication link between client and the selected processing server.

The selection of the processing server may be based on at least one of the group comprising a client location, a processing server location, a client identity, a processing server load and a content of the processing servers requested with a client request.

The non-active load balancing units included in the plurality of processing servers may check the operation of the active load balancing unit. The checking of the operation of the active load balancing unit may include a surveillance of the balancing process of the processing load in order to ensure proper and faultless operation thereof. The checking operation may include the recognition of a defective active load balancing unit.

One of the non-active load balancing units may re-configure its operation mode into the active operation mode in order to carry out the balancing of the processing load in the network. The reconfiguration process may be initiated in case of a recognition of a defective active load balancing unit. Particularly, a defective or failing active load balancing unit may be recognized by performing the checking operation carried out by at least one of said non-active load balancing units.

The checking operation performed by a non-active load balancing unit may carry out generating of a request for checking the operation of an active load balancing unit, transmitting the request to the active load balancing unit and receiving a request response corresponding to the generated request from the active load balancing unit. The request response may allow to check the operation of the active load balancing unit or a missing request response may allow to recognize a defective active load balancing unit.

The checking operation of a non-active load balancing unit may involve additional processing operations carried out by an active load balancing unit. The active load balancing unit may perform receiving of a request from a non-active load balancing unit generated to check the operation of an active load balancing unit. The non-active load balancing unit may additionally carry out generating of a request response and transmitting of the request response to a non-active load balancing unit.

The request for checking operation of an active load balancing unit may be a certain L/B request which may contain instructions for the active load balancing unit. Further, the request response of an active load balancing unit due to a checking request of a non-active load balancing unit may be a certain L/B request response and may contain information according to the instructions contained in the checking request.

The L/B request response of the active load balancing unit may contain at least one of the group comprising current available processing servers, processing server related information, current requesting clients, client related information, client grouping information and processing load of the processing servers.

The non-active load balancing unit may perform a re-start of a defective active load balancing unit in order to put again the defective load balancing unit into proper operation if necessary.

The non-active load balancing unit may perform a re-configuration of external network devices routing network communication in a network. For example, routing network devices may be routers, switches, gateways or the like.

Each processing server may report its processing load to the active load balancing unit. Moreover, each processing server may report its processing load to each load balancing unit independent of the operation mode of the load balancing unit.

According to an embodiment of the present invention a software tool for balancing a processing load in a network is provided. The software tool comprises program portions for carrying out the operations of the aforementioned methods when the software tool is implemented in a computer program and/or executed.

According to an embodiment of the present invention there is provided a computer program for balancing a processing load in a network. The computer program comprises program code portions for carrying out the operations of the aforementioned methods when the program is executed on a computer or a network device.

According to an embodiment of the present invention, a computer program product is provided which comprises program code portions stored on a computer readable medium for carrying out the aforementioned methods when said program product is executed on a computer or network device. The load balancing units comprise suitable and adapted components for carrying out the method for balancing the processing load of a network.

According to an embodiment of the invention, a load balancing unit for balancing the processing load in a network is provided. The load balancing unit may be operated in two different operation modes, i.e. in an active operation mode and in a non-active operation mode. The load balancing unit operating in the active operation mode may be termed as an active load balancing unit and the load balancing unit in the non-active operation mode may be termed as an non-active operation mode. The respective components may be constituted by a data processing device which may be comprised by the load balancing unit or the processing server including the load balancing unit. Further, the components may be constituted by a code section for executing on one or a plurality of data processing devices containing instructions for carrying out the necessary processing operations. Moreover, the components may be constituted by a portion of the processing server or by a portion of the load balancing unit. The active load balancing unit may also comprise a receiving component for receiving a client request generated by the client, a server selection component for selecting a processing server of the plurality of processing servers in a network to serve the client request and a communication component for establishing a communication link between client and selected processing server.

The communication component for establishing a communication link may further involve the use of a component for generating a re-direction notification and a component for transmitting the re-direction notification to the client. The re-direction notification may instruct the client who generated and transmitted the client request to the active load balancing unit to direct a following request directly to the selected processing server in order to establish a direct communication link between client and selected processing server.

The active load balancing unit may comprise an authorizing component for authorizing a client request or authorizing the establishment of the communication link between client and the selected processing server.

The selection component of the active load balancing unit for selecting a processing server may base the selection on at least one of the group comprising a client location, a processing server location, a client identity, a processing server load and a content of the processing server requested with a client request.

The non-active load balancing unit may include checking a component for checking the operation of the active load balancing unit.

The non-active load balancing unit may include a re-configuration component for re-configuring a load balancing unit operated in a non-active operation mode into a load balancing unit operated in an active operation mode.

The checking component for checking the operation of an active load balancing unit may further comprise request a generation component for generating a request, a request transmitting component for transmitting the request to an active load balancing unit and a request response receiving component for receiving a request response from the active load balancing unit. The request generation component may generate a request which is able to check the operation of the active load balancing unit, i.e. the balancing of the processing load in the network. A corresponding request response may be received by the request response component from the active load balancing unit informing the non-active load balancing unit of the operation status of the active load balancing unit.

The active load balancing unit may include respective components for serving the checking request of a non-active load balancing unit transmitted in order to check the operation of the active load balancing unit. The respective components for serving may include a request receiving component for receiving a request from a non-active load balancing unit, a request response generating component for generating a corresponding request response due to the checking request and a request response transmitting component for transmitting the request response to the respective non-active load balancing unit.

The request for checking operation of an active load balancing unit may be a certain L/B (load balancing) request which may contain instructions for the active load balancing unit. Further, the request response of an active load balancing unit due to a checking request of a non-active load balancing unit may be a certain L/B (load balancing) request response and may contain information according to the instructions contained in the checking request.

The L/B request response of the active load balancing unit may contain at least one of the group comprising current available processing servers, processing server related information, current requesting clients, client related information, client grouping information and processing load of the processing servers.

The non-active load balancing unit may include a re-starting component for re-starting a defective active load balancing unit in order to put again the defective load balancing unit into proper operation if necessary.

The non-active load balancing unit may include network device a re-configuring component for re-configuring external network devices routing network communication in a network. For example, routing network devices may be routers, switches, gateways or the like.

According to an embodiment of the invention, a processing server including a load balancing unit for balancing the processing load in a network is provided.

According to an embodiment of the invention, a server system of a plurality of processing servers including a load balancing unit for balancing the processing load in a network is provided.

Embodiments of the present invention will be further illustrated and explained to those of ordinary skill in the art after having read the following detailed description of the embodiments which are exemplified in the various drawing figures.

### Brief Description of the Drawings

- Fig. 1: illustrates the task of a state of the art load balancing unit interconnected between requesting clients and a server system comprising a plurality of processing servers,
- Fig. 2: shows a block diagram illustrating a server system with respect to an embodiment of the invention,
- Fig. 3a: shows a block diagram illustrating a processing server including an active load balancing unit according to a further embodiment of the invention,
- Fig. 3b: shows a flow diagram illustrating a sequence of processing operations executed by an active load balancing unit with respect to a further embodiment of the invention,
- Fig. 4a: shows a block diagram illustrating an active load balancing unit and a non-active load balancing unit according to a further embodiment of the invention,
- Fig. 4b: shows a block diagram illustrating an active load balancing unit and a non-active load balancing unit with respect to a further embodiment of the invention,
- Fig. 4c: shows a block diagram illustrating an active load balancing unit and a non-active load balancing unit according to a further embodiment of the invention,
- Fig. 5: shows a flow diagram illustrating a sequence of processing operations executed by a non-active load balancing unit with respect to a further embodiment of the invention,
- Fig. 6a: shows a flow diagram illustrating a sequence of processing operations with respect to the operation of an active load balancing unit according to a further embodiment of the present invention,
- Fig. 6b: shows a sequence of processing operations of the checking process with respect to the operation of an active load balancing unit according to an embodiment of the present invention.
- Fig. 7a: shows a flow diagram illustrating a sequence of operations of the communication between client, active load balancing unit and processing server with respect to a further embodiment of the invention,
- Fig. 7b: shows a flow diagram illustrating a sequence of operations of the communication between active load balancing unit and two non-active load balancing units according to a further embodiment of the invention,
- Fig. 8: shows a flow diagram illustrating a sequence of operations of the communication between an active load balancing unit and two non-active load balancing units in case of a failure of the active load balancing unit with respect to a further embodiment of the invention,
- Fig. 9: shows a block diagram illustrating a server system consisting of processing server including load balancing units and connected to a network routing device according to a further embodiment of the invention. a failure of the active load balancing unit with respect to a further embodiment of the invention,

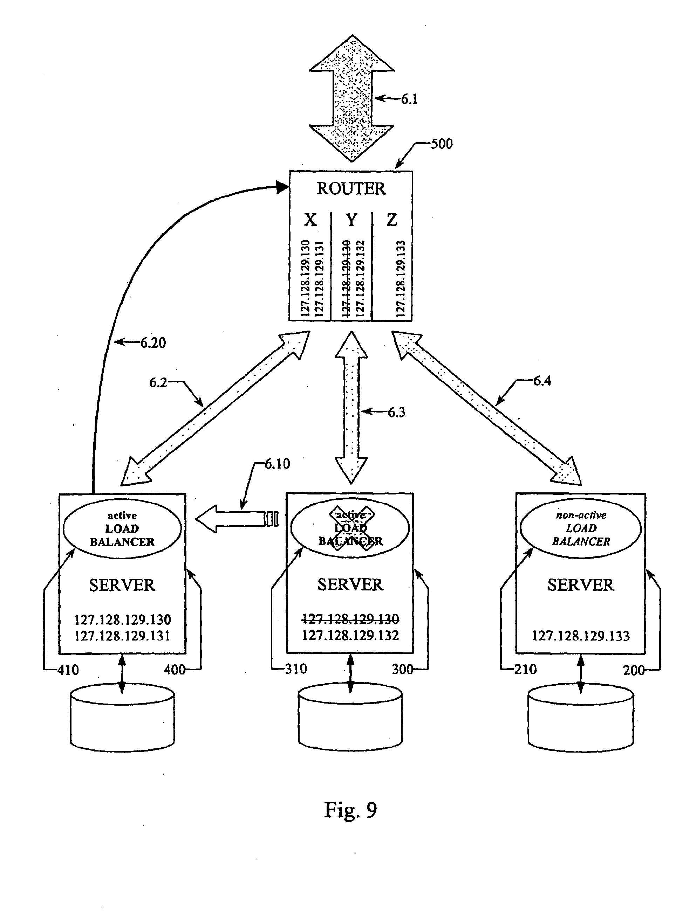

- Fig. 9: shows a block diagram illustrating a server system consisting of processing server including load balancing units and connected to a network routing device according to a further embodiment of the invention.

### Detailed description

In the figures corresponding reference numerals denote corresponding features.

In the following there is provided an arrangement of load balancing units interconnected between requesting clients and several content servers, a so called server farm. This arrangement illustrates a typical state of the art server system comprising several processing servers and a load balancing unit for distributing client requests onto the processing servers of the server system.

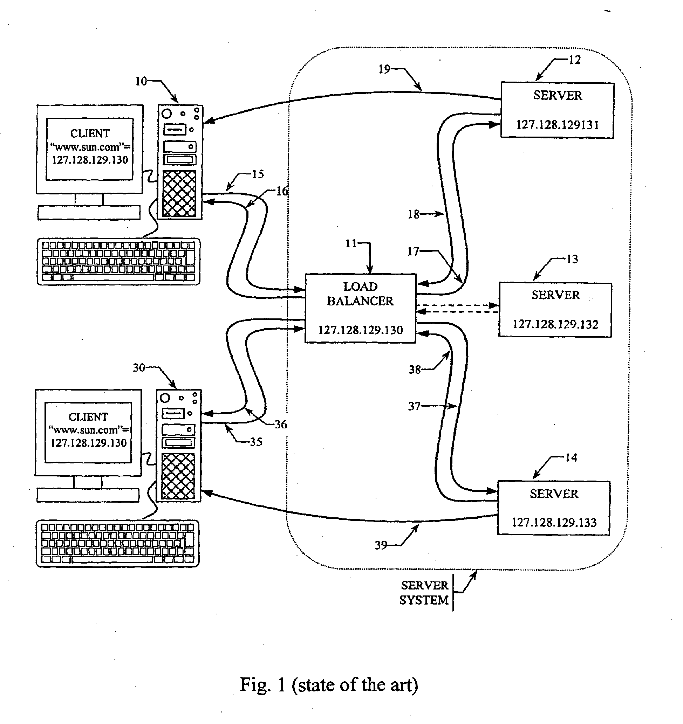

Fig. 1 shows a client 10 and a client 30 representing an arbitrary number of clients, a load balancing unit 11 serving as load balancing unit to distribute client requests among three connected processing servers 12, 13 and 14 for serving client requests and representing an arbitrary number of processing servers. The load balancing unit 11 as also the connected processing servers 12, 13 and 14 may be part of a local network whereas clients 10 and 30 may be connected via a wide area network. The wide area network may be the internet but may be also any other network.

To illustrate the state of the art concerning load balancing units a web-server system which may provide contents based on a mark-up language is referred. The web-server system may be accessed by the internet protocol (IP) and addressed by the corresponding internet protocol (IP) address. In detail, the web-server system is based on the load balancing unit 11 and the connected processing servers 12, 13 and 14 thereto. Load balancing unit 11 and the processing servers 12, 13 and 14 are constituted by single processing devices. These processing devices are addressed by individual IP addresses wherein the load balancing unit 11 may be addressed by the IP address "127.128.129.130", the processing server 12 by the IP address "127.128.129.131", the processing server 13 by the IP address "127.128.129.132" and the processing server 14 by the IP address "127.128.129.133". Usually, a client generating a request to a web-server system uses a clear text address like "www.sun.com". This clear text address or alias address, respectively, is converted into a corresponding IP address involving certain dedicated servers called domain name servers (DNS). The DNS server are public accessible servers. DNS servers comprise look-up tables converting clear text addresses into IP addresses. Each clear text address corresponds to one unique IP address which enable a worldwide unique addressing of each server connected to the internet. The request of client 10 addressed to "www.sun.com" is resolved into the IP address "127.128.129.130". Since the web server services are provided by a server system the IP address resolved by the DNS is equal to the IP address of the load balancing unit of the web-server system. The load balancing unit distributes the client requests over the server system. According to this IP address the request of client 10 is routed via link 15 to the load balancing unit 11 of the web-server system. The load balancing unit distributes the client request onto the available processing servers 12, 13 and 14 according to a certain load balancing method herein via link 17 to processing server 12. Processing server 12 responds to the request of client 10. According to the implemented load balancing method different kind of communication links to transfer the request response of processing server 12 to the client 10 may be used. It is possible to route the request response via link 18 and link 16 back to the client 10 through the load balancing unit 11. It is also possible to route the response of processing server 12 directly to the client 10 via link 19 bypassing the load balancing unit 11.

A simultaneously accessing client 30 also addressing the processing server "www.sun.com" transmits a request via link 35 to the load balancing unit 11. This request is routed via link 37 to processing server 14 of the server system. Similarly, the processing server response of the request of client 30 is re-routed via link 38 and link 36 through the load balancing unit 11 to the client 30 or is re-routed via link 39 bypassing the load balancing unit 11. The processing server 13 may be involved in serving server services by further accessing clients.

The detailed operation of the load balancing unit and the processing servers to handle a request and to generate a request responses is not described here since the drawbacks of prior load balancing units can be easily understood. Each client request has to pass the load balancing unit which means that a failure of the load balancing unit leads to a total failure of the server system.

Since the number of requests is high there must be employed highly capable and powerful processing devices to establish the load balancing. Although a load balancing unit often redirects client accesses according to an implemented load balancing method and a re-direction of a client request may not involve excessive processing load the load balancing unit has to handle a plurality of single processing servers combined to a server system. The processing load of the load balancing unit due to the client request handling and distributing therefore requires a sufficiently big processing device executing the load balancing process. Such devices are cost-intensive. Back-up devices which may be used to replace a defective load balancing unit improve the accessibility of the server system but increase additionally costs of the whole system, especially since back-up devices require maintenance though they are not constantly in use.

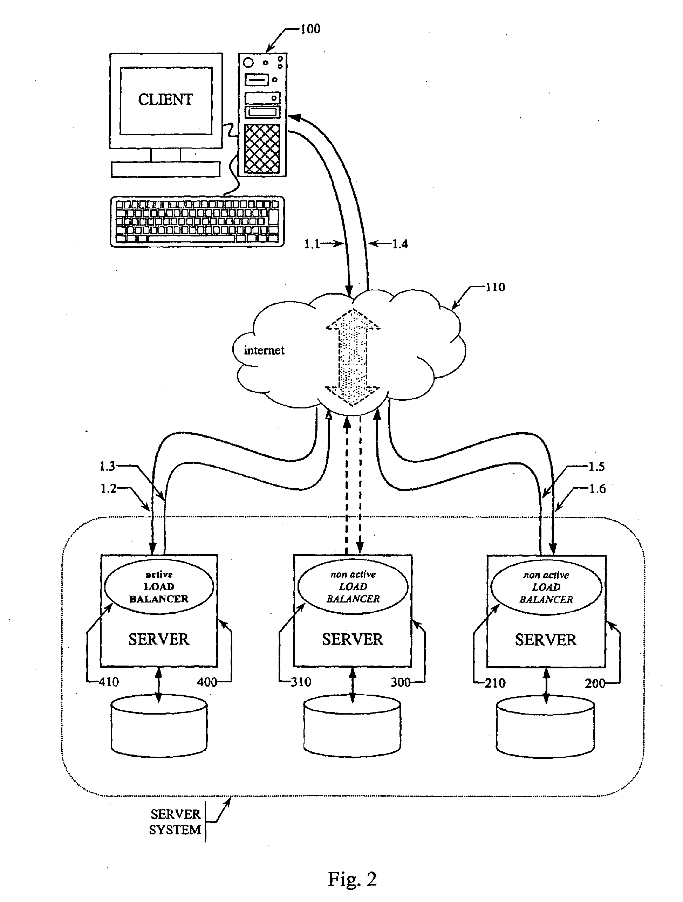

The following first embodiment of the invention will be described with respect to Fig. 2. Fig. 2 illustrates an arrangement of a server system wherein the load of single processing servers is controlled by using a load balancing unit to distribute requests directed to the server system over the single processing servers thereof.

Fig. 2 shows a client 100 representing an arbitrary number of clients which may be provided and which may be enabled to generate client requests. Further, a server system represented by the processing servers 200, 300 and 400 is provided. These processing servers provide services which are requested by the request of client 100. The number of processing servers arranged in the server system is not limited to the three depicted processing servers. The processing servers represent an arbitrary number of processing servers which may be provided. Each processing server (processing server 200, 300 and 400) of the server system comprises a load balancing unit, i.e. load balancing units 210, 310 and 410 all able to distribute incoming requests such as a request of client 100 onto the processing servers 200, 300 and 400. The load balancing units included in the processing servers 200, 300 and 400 can be operated in two different operation modes, an active operation mode and a non-active operation mode. It should be assumed that the load balancing unit 410 included in the processing server 400 operates in an active mode wherein the load balancing units 210 and 310 of the respective processing servers 200 and 300 operate in non-active modes.

The processing servers 200, 300 and 400 may be part of a local area network and the client 100 is able to access the local network through a communication link. The communication link may designate the possibility of data exchange between client and a respective server. The communication link may therefore define a virtual connection which may be established via different physical media based on various communication systems each able to transmit data. The communication link may be understood as a transmission path over which data may be exchanged by processing devices. The communication links or transmission paths may be bidirectional in order to allow transmission and receiving by each connected processing device.

It should be understood that the link or communication link, respectively, as defined above may represent various communication links of any kind, which may be defined as having a physical or virtual connection which enables devices involved in the connection to transmit and receive electronic and other data between each other. Moreover communication links based on different transfer and/or transmission media may be combined.

Usually, processing devices such as client 100 or processing servers 200, 300 and 400 may be connected to a network system which enable data exchange between these processing devices. Local area networks (LAN) as also wide area networks (WAN) are well known and used for connecting processing devices. The internet, a public wide area network provides additionally to connect the separated local area and wide area networks and may be accessed via different dedicated communication links.

Often access to local and wide area networks is established by using the service of a network provider. Usually, network service providers provide access to local or wide area networks via special dial-in servers. The dial-in servers enable data exchange between processing devices connecting via the above described communication links to processing devices connected to the dial-in server usually via a local or wide area network. Network service providers are usually used to access the internet. Corresponding services may be also provided by companies allowing their employee to access the company's own local area network or wide area network. These dial-in servers can be connected using various communication links like wireless links, analog and digital telephone lines.

Moreover, the arrangement of the processing servers 200, 300 and 400 is also not limited to a local area network. The processing server 200, 300 and 400 may be arranged as a part of a wide area network.

In the following the client is described in detail.

The client 100 may be a general purpose processing device such as a personal computer, a mobile phone, a data organizer having suitable code sections, components and elements to connect to the server systems. This processing device executes software programs which are able to generate requests for a processing server, able to transmit the requests, able to receive request responses and able to react according to request responses of the processing server. In order to generate requests dedicated for a processing server and react accordingly to the request response of the processing server a so called client software program is executed on the processing device. The transmitting and receiving of the exchanged data may be executed by additional software tools according to the kind of communication link used for connecting the server system. The client 100 generates a request which instructs a processing server to generate an according request response. This request can include instructions to retrieve and return data out of a database, files out of a file storing server or mark-up language based data like a web-page. The request may also include instructions which make it necessary to execute applications on the processing server to generate the respective request response. In order to route the client request to the addressed processing server the requests include a server address.

In the following the processing servers and the included load balancing units therein are described in detail.

Each processing server 200, 300 and 400 include the load balancing units 210, 310 and 410, respectively. The processing servers 200, 300 and 400 may be constituted by a data processing device distinguished by a large capacity in order to handle a large number of client requests. The processing servers 200, 300 and 400 as also the load balancing units 210, 310 and 410 may be operated on the respective data processing device independently. This implies, for example, that processing server 400 provides server services and provides simultaneously load balancing services for the whole server system. The different services may be provided by a processing server unit and a load balancing unit included in the processing server 400. These units may be dedicated data processing units or may be realized by program sections at the processing device. The processing servers 200 and 300 may have the same composition of processing server unit and load balancing unit as the above illustrated processing server 400.

One included load balancing unit of the server system is in the active operation mode which means that the active load balancing unit receives the client requests and carries out the load balancing of the client requests. The other remaining load balancing units of the server system are in non-active operation modes. According to the one embodiment load balancing unit 410 of processing server 400 is active wherein load balancing units 310 and 210 are non-active. Non-active load balancing units receive no client requests.

Requests of clients are typically routed through networks in order to reach the concerning recipient. Hence, an unambiguous addressing method is usually provided in order to address single components of a network like a processing server, single connected computer and the like. Further, a service provided by a processing server or a server system may be usually addressed using a single default address. In case of a server system the single address is assigned to the load balancing unit responsible for balancing the load of the server system caused by client requests. The distribution of client requests require valid single server addresses to address each server independently. In order to provide a default valid address for the server system the default address is assigned to the active load balancing unit 410. Incoming client requests addressed to the default address of the server system are routed to the active load balancing unit. Consequently, the processing server including the active load balancing unit may have two different valid addresses wherein one address is assigned to the server services and the other address is assigned to the load balancing services. This address distribution enables to route first client requests to the load balancing unit and also enables direct accesses of the clients to the dedicated server services.

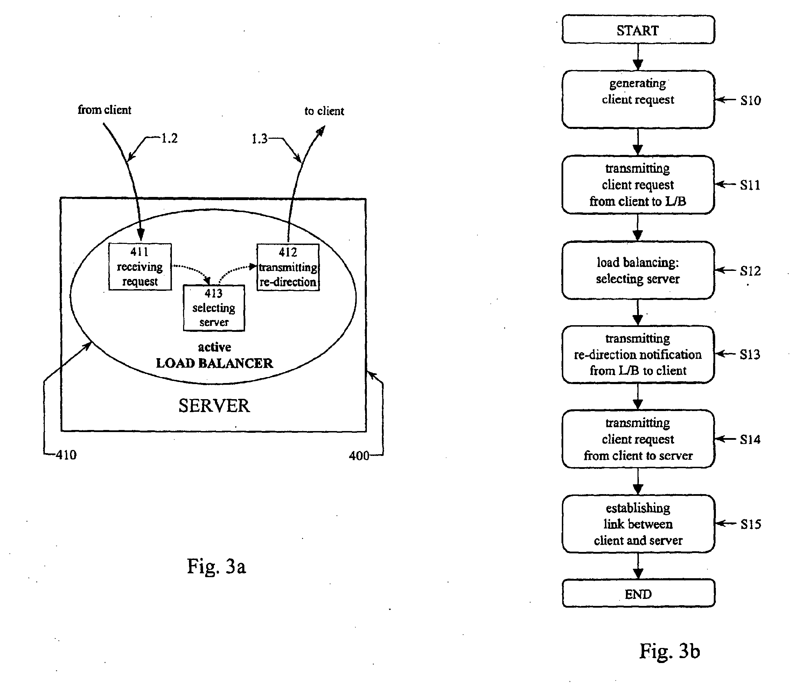

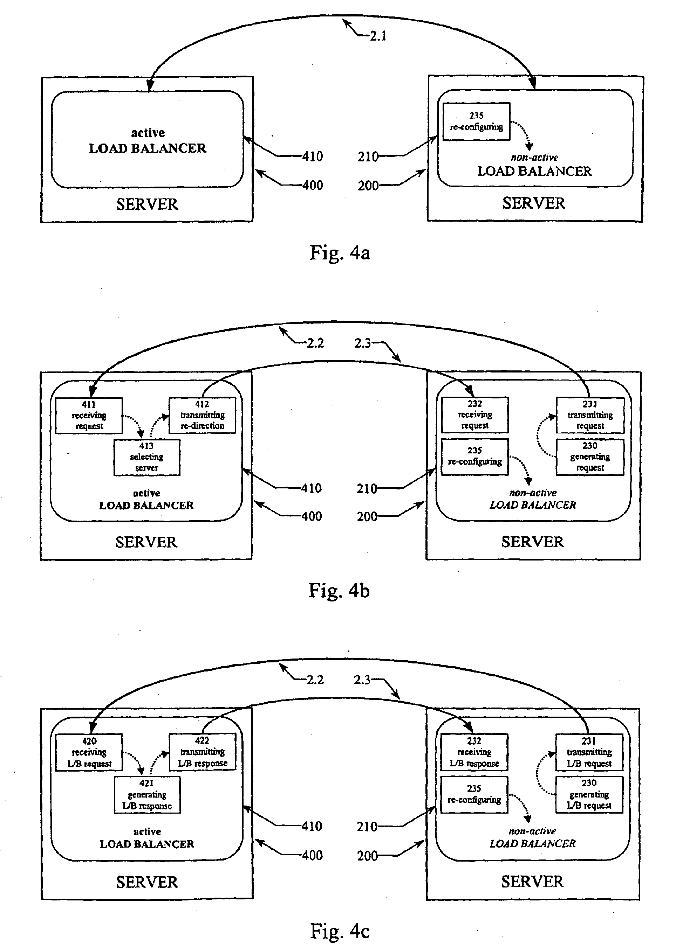

In the following the active and non-active load balancing units included in the single processing servers of the server system are described. The description of the load balancing units will give an overview of the load balancing unit operation and the handling of client requests. A detailed description of the load balancing units operated in active operation mode will follow with reference to Fig. 3a. A further detailed description of the load balancing units operated in non-active operation mode will be given with respect to Fig. 4a and Fig. 4b.

The load balancing units 210, 310 and 410 are included in the single processing servers 200, 300 and 400 of the server system. The processing server 400 includes the active load balancing unit 410 of the server system. The processing servers 200 and 300 include identical load balancing units 210 and 310 operating in non-active operation modes.

The active load balancing unit 410 balances the load of the server system constituted of a plurality of processing servers. The active load balancing unit 410 comprises suitable components for receiving client requests, balancing of the processing load of the server system or selecting of a processing server of the server system, respectively, and establishing of a communication link. A first client request may be generated by client 100 and routed via communication link 1.1 and 1.2 to the active load balancing unit 410. The client request may be addressed to the default address of the server system wherein the default address is assigned to the active load balancing unit 410 of the server system.

The client request may be transmitted through a suitable link 1.1 and further through the internet 110. The communication link 1.1 enables to transmit and receive data via the internet to a connected processing device thereof. The suitable link 1.1 may be a communication link using analog or digital telephone lines, dedicated connection lines, digital subscriber lines (DSL) or wireless communication, like wireless local area network (WLAN) links, Bluetooth links or wireless links via a mobile communication system (GSM, UMTS, DCS etc.). Usually, these communication lines and links are used to access a service provider. Network service providers provide access to local or wide area networks via special dial-in servers. The dial-in servers enable data exchange between processing devices connecting via the above described communication lines and links to processing devices connected to the dial-in server usually via a local or wide area network. Herein, internet service providers may enable a communication link to the internet. Corresponding services may be also provided by companies allowing their employee to access the company's own local area network or wide area network. These dial-in servers can be connected using various communication links like wireless links, analog and digital telephone lines.

The server system may be connected to the internet in a suitable way. The active load balancing unit 410 selects a processing server for serving the request according to the instructions included in the client request of client 100. Several methods may be used for selecting a processing server of the server system in order to balance the load of the server system in a efficient and adequate way. Possible methods will be described below with respect to Fig. 3a.

The active load balancing unit 410 assigns a processing server for serving the client request to client 100 by re-directing the client request to the selected processing server. The re-direction of the client 100 to a selected processing server may be carried out by transmitting a re-direction notification from the active load balancing unit as response to the first client request. The redirection may contain instructions instructing the client 100 to direct the client request to the selected processing server. These instructions may contain the dedicated address of the selected processing server. In reference to Fig. 2, the selected processing server may be processing server 200. Therefore, the re-direction notification contains the address of processing server 200. The re-direction notification is transmitted via communication link 1.3 and 1.4 to the client 100. The client 100 may generate a client request similar to the client request which was transmitted to the active load balancing unit before. Instead of using the default address of the server system the address of processing server 200 contained in the re-direction notification is used for generating the client request. The resulting client request is transmitted via communication link 1.6 to the selected processing server directly. The address of the selected processing server 200 may enable to establish a direct communication link between client 100 and selected processing server 200 without involving the active load balancing unit of the server system. The active load balancing unit of the system balances only first requests of clients. Following data exchange between the selected processing servers and clients is transmitted via direct communication links.

The non-active load balancing units 210 and 310 are not involved in the current balancing of the load of the server system. The non-active load balancing units 210 and 310 may be able to take over the balancing of the load of the server system at any time since each load balancing unit 210, 310 or 410 comprises the same components for operating the balancing. The non-active load balancing units 210 and 310 check the proper operation of the active load balancing unit 410 from time to time or in regular intervals of time. The check may be carried out as a simple reply test on a simple network request like a ping test or a more trustworthy check including a check of the selection operation of the active load balancing unit 410. Possible methods to carry out the check on the operation of the active load balancing unit 410 will be described below more precisely with respect to Fig. 4a and Fig. 4b. In case of failure of the operation of the active load balancing unit 410 the current checking non-active load balancing unit re-configures and takes over the balancing of the load of the server system. The re-configuration involves a new routing of the client request directed to the default address of the server system in order to exclude the defective active load balancing unit from the load balancing process of the server system.

It may be noted that the differentiation of the several components comprised in the active load balancing unit and the non-active load balancing unit has been done to structure the description of the embodiment of the invention in a suitable way and to ease understanding of the embodiment. It should be understood that the components of the active load balancing unit and the non-active load balancing unit are all comprised in each load balancing unit independent of the operation mode. Hence, the operation modes of the load balancing unit may be changed during operation offering a failure redundant load balancing system to ensure accessibility of the server system during the whole period of operation.

In the following an embodiment of the processing server included load balancing unit operating in active operation mode will be illustrated with respect to Fig. 3a. Therefore, Fig. 3a shows a block diagram of a processing server 400 including the active load balancing unit 410 according to an embodiment of the invention. Fig. 3a shows a communication link 1.2 used by an incoming client request and a communication link 1.3 used by an outgoing client request response.

The active load balancing unit 410 balances the load for the plurality of processing servers, e.g. processing server 200, 300, and 400, of the server system.

In the following the active load balancing unit 410 will be described in detail.

The active load balancing unit 410 is provided with a receiving component 411 for receiving client requests from the client 100. The receiving component 411 may be constituted by a data processing device or a program section executed at the active load balancing unit 410 in connection to the client 100 via the above described network and communication links. The receiving component 411 may be realized by a server executable script or a program section executed at the server which includes the load balancing unit.

Further, the active load balancing unit 410 may comprise a selection component 413 for selecting at least one of the processing servers 200, 300 and 400. The selection component 413 is in connection with the receiving component 411 for obtaining the client request of the client 100 or for obtaining information contained in the client request. The selection component 413 may be a dedicated data processing unit or may be a plurality of interconnecting data processing units or may be realized by a program section executed at the active load balancing unit 410. The selection component 413 may be realized by a server executable script or a program section executed at the server which includes the load balancing unit. Upon receiving a client request or information contained in the client request the selection component 413 selects at least one of the processing servers 200, 300 and 400 for serving the request.

In order to assign a processing server for serving and processing the client request the selection component 413 maintains a list of all available processing servers, in case of a first embodiment with respect to Fig. 2 the list encloses the processing servers 200, 300 and 400. Further, the selection component 413 may maintain information on location of the clients and the available processing servers and/or their relative processing load, for example a load due to the client requests. The processing servers may report their processing load to the selection component 413 of the active load balancing unit 410 from time to time or in regular intervals of time. Using the individual load of each processing server of the server system may allow the active load balancing unit to select a processing server such that the total processing server load is equally distributed over all processing servers of the server system in order to ensure equal relative processing server loads. Corresponding method allow to estimate a relative processing server load even if the processing servers are non homogeneous, e.g. data processing devices of different processing capability.

The content served by the server system enclosing processing servers 200, 300 and 400 may be split. Basically, server systems can be divided by the arrangement of content in two classes. Mirroring server systems are distinguished by identical content comprised by the processing servers which may be served by each processing server of the server system to requesting clients. Content distributed systems are distinguished by different content of the processing servers of a server system. A requesting client may have to be assigned to a certain processing server of respective content. The active load balancing unit 410 maintains a list of content each processing server comprises such that client requests containing a request for a certain part of content can be directed to the respective processing server containing the respective part of content.

Moreover, the selection component 413 may maintain information on a client request history comprising for example an identity of requesting clients, requested service of the processing servers and processing servers previously selected for serving of previous clients in order to enable a grouping of the client request and to assign requests of a certain client to one certain processing server. Further, a processing server can be selected such that requests from a client 100 will be grouped onto one processing server.

Upon receiving a request from a client 100 at the active load balancing unit 410 the selection component 413 may select a processing server located close to the client 100. A client identity contained in the client request allows to select a respective processing server.

In brief, the selection of the processing server may be based on at least one of the following operations:
- a server load or a relative server load, respectively,
- a certain requested server content wherein the server content is distributed over the plurality of processing servers of the server system,
- a client and/or server identity and/or
- a server and/or client location.

Further, the active load balancing unit 410 may comprise a communication component 412 allowing to establish a communication link between the client 100 and the selected processing server. An uninterrupted and immediate link between client 100 and selected processing server is established without involving the active load balancing unit 410. Therefore the client 100 is instructed by the active load balancing unit 410 to establish such an immediate link to the selected processing server.

The communication component 412 may be constituted by a dedicated data processing device, connected to the selection component 413 for obtaining information on the selected processing server therefrom or by a code section executed at the active load balancing unit. The communication component 412 may be realized by a server executable script or a program section executed at the server which includes the load balancing unit. Further, the communication component 412 may provide the required tools for contacting the selected processing server in order to prepare the establishing of a direct communication link between client 100 and selected processing server wherein no load balancing unit is in between. The establishing of a direct communication link between client 100 and processing server may include additional processing server related information which are obtained by the active load balancing unit from the processing server and transmitted to the client 100 in order to enable the client 100 to include this information in a request transmitted directly to the selected processing server enabling a direct communication link.

A software tool for balancing a processing load in a network may be provided. The software tool may comprise program portions for carrying out the operations and/or functions of the aforementioned active load balancing unit and non-active load balancing unit when the software tool is implemented in a computer program and/or executed.

A computer readable medium may be provided, having a computer program recorded thereon, where the program or server executable script are to make a computer or a system of data processing devices execute functions of the active operation mode and non-active operation mode of the load balancing unit included in the processing server. A computer readable medium can be a magnetic or optical or other tangible medium suitable for recording a respective program thereon, but can also be a signal, e.g., analog or digital, electromagnetic or optical, in which the program is embodied for transmission.

Further, a computer program product may be provided comprising the computer readable medium.

In the following a further embodiment of the present invention will be described with respect to Fig. 3b. Fig. 3b shows a flow diagram illustrating a sequence of processing operations executed by a load balancing unit with respect to Fig. 3a. Additionally, reference will also be made to the above described Fig. 3a in order to complete the view of the load balancing processing operations described in Fig. 3b.

In an operation S10 the client 100 generates a client request. The client request may contain a request for retrieving a part of the content of the server system, like requesting for a certain database content or mark-up language based content. The request may also contain a request for execution of an application executable on the servers. The client request may be generated by a certain request generating program executed at the client 100. The execution may be further invoked by user activities but may be also an automatically generated request. The request may include additionally information on the client such as identity or location information.

In an operation S 11 the client request is transmitted from the client 100 to the active load balancing unit (L/B) 410. The transmission may be routed through different kinds of networks and/or communications links like above described.

In an operation S12 the load balancing unit 410 selects a processing server of the server system to serve the request of client 100. The active load balancing unit 410 selects the processing server according to the information available to the active load balancing unit 410.

After selecting the processing server, for example processing server 200, by the active load balancing unit 410 the selected processing server may be informed of the client request and be prepared for serving the client request according to the information contained in the client request of client 100. The selected processing server may be informed in order to authorize the direct access of the client 100 or may be informed to start a certain application corresponding to the client request. The authorization may be based on an identity of the client contained in the client request or special authenticating information provided by the client and contained in the client request.

According to the selection of the active load balancing unit 410 in an operation S13 a notification is retransmitted from the active load balancing unit 410 to the client 100 including an instruction for accessing the selected processing server. The notification may include an instruction for re-directing the client request of client 100 transmitted to the load balancing unit in operation S 11.

In an operation S 14 the client 100 transmits a following request to the selected processing server. The client request may be transmitted again now directed to the selected processing server, for example processing server 200, according to the contained re-direction information of the notification of the active load balancing unit 410. This request to the selected processing server may contain additional information included in the notification which was transmitted from the active load balancing unit 410 to the client 100 in operation S13.

In an operation S15 the selected processing server receives the client request routed directly from the client 100 according to the re-direction notification of the active load balancing unit 410 and establishes a direct communication link in order to serve according to the client request. The client request may involve instructions to retrieve part of the server content or to execute a certain application executable on the server.

Due to the fact that the client 100 may be instructed by the active load balancing unit 410 to re-direct the request directly to the selected processing server 200 load balancing of the server system is performed only on the first transmission of the client request. Further data exchange initiated by the client request between selected processing server 200 and requesting client 100 may use the established direct communication link and therefore may not be relayed by the active load balancing unit 410.

In the following embodiments of the interoperation of the active load balancing unit and the non-active load balancing units both included in the single processing servers of the server system will be illustrated with respect to Fig. 4a, 4b and 4c. Different embodiments of the interoperation involve different kind of components performing the interoperation between active load balancing unit and non-active load balancing units.

Therefore, Fig. 4a shows a first block diagram illustration an active load balancing unit 410 and a non-active load balancing unit 210 according to an embodiment. The load balancing units are integrated in the respective processing servers 400 and 200. A communication link 2.1 allows data exchange between the load balancing units. The non-active load balancing unit 210 represents an arbitrary number of non-active load balancing units. According to an embodiment of the invention, each processing server includes a load balancing unit, wherein one of the included load balancing unit is operated as active load balancing unit and the remaining other load balancing units are operated as non-active load balancing units. The interoperation of the active load balancing unit and the non-active load balancing units of the server system is described as an example involving an active load balancing unit 410 and one non-active load balancing unit 210 of the plurality of non-active load balancing units.

In the following the non-active load balancing unit 210 will be described in detail. Each non-active load balancing unit of the server system is able to take over and carry out the operation of an active load balancing unit. Therefore, further suitable components are included in the load balancing units to enable the take over of the load balancing in case of a failure of the active load balancing unit 410.

The term active load balancing unit describes a load balancing unit balancing the load of a server system. The operation of an active load balancing unit is described above in view of embodiments according to the method of the present invention. The term non-active load balancing unit describes a load balancing unit which is not involved in balancing of the load of the server system. But the non-active load balancing units are operated as back-up load balancing units in case of a failure of the active load balancing units.

In order to determine a failure of the active load balancing unit 410 each non-active load balancing unit may comprise a checking component for checking the operation of the active load balancing units. The checking component may be a constituted by a data processing device or a program section executed at the non-active load balancing unit 210. The checking may be realized by a server executable script or a program section executed at the server which includes the load balancing unit. In case of a failure of the active load balancing unit 410 the checking component for checking the operation of the active load balancing unit allows the non-active load balancing unit 210 to recognize the failure and to take over the load balancing operation of the server system. The checking of the operation of the active load balancing unit is performed from time to time or in regular intervals of time.

A dedicated communication link 2.1 may enable the communication between the non-active load balancing unit 210 and the active load balancing unit 410. This communication link 2.1 may be used to transmit suitable requests generated at the non-active load balancing unit 210 to the active load balancing unit 410. A respective request response may allow to check the operation of the active load balancing unit 410. In case of a missing request response within a certain pre-defined period of time or an incorrect request response the non-active load balancing unit 210 recognizes the failure of the active load balancing unit and may take over and carry out the balancing of the processing load of the server system.

It might also be possible that the active load balancing unit 410 transmits independently operation information to the non-active load balancing units in regular intervals of time. Missing operation information within a certain pre-defined period of time may lead to the take over and carry out of the load balancing of the server system by a corresponding non-active load balancing unit.

The communication link 2.1 may be established via the network connecting the processing servers of the server system. The communication link 2.1 may be established by a separate communication line especially dedicated to check the operation of the active load balancing unit 410. Such communication lines known as heartbeat lines are used for connecting back-up servers. The active unit generates a periodic signal on the heartbeat line indicating proper operation. A missing signal on the heartbeat line signalizes a failure of the signal generating component. A heartbeat signal may be also transmitted via a communication network like a local area network connecting the processing servers of the server system.

The non-active load balancing unit 210 comprises additional a re-configuration component 235 for re-configuring from non-active operation mode to active operation mode. The reconfiguration component 235 may be constituted by a data processing device or a program section executed at the non-active load balancing unit 210. The re-configuration component may be realized by a server executable script or a program section executed at the server which includes the load balancing unit. The re-configuration component may perform the re-configuring of the client request routing since the new active load balancing unit is included in another processing server and therefore, first client request are routed to the respective processing server.

The client requests may be routed automatically to the respective new active load balancing unit. The active load balancing unit are always addressable by the default unique network address of the server system to which the client request are directed. Since the default network address is automatically assigned to the new active load balancing unit or processing server including the new active load balancing unit, respectively, during the re-configuration procedure the client request are also automatically routed to the respective processing server including the new active load balancing unit. The server system may serve the corresponding services despite of the defective active load balancing unit since a re-configured new active load balancing unit is available for load balancing after the re-configuration.

The default network address of the system may be known by each load balancing unit. The active load balancing unit sets this default network address as valid and identifies itself as the respective network device to which first client requests directed to the default address of the server system are delivered. The non-active load balancing units may not set the default network address as valid so that first client requests are not delivered to the respective servers including the non-active load balancing units. In case of a re-configuration one of the non-active load balancing units takes over and carries out the balancing of the load of the server system. This involves a setting valid of the default network address.

Further, a network address distributing server may report the default network address to the load balancing units in case of a re-configuration. Correspondingly, a re-configuration involves a request transmission of a re-configuring non-active load balancing unit to this dedicated server and the server transmits the default address to the re-configuring non-active load balancing unit. This may enable the re-configuring non-active load balancing unit to set the default address so that client requests are automatically routed to the re-configured new active load balancing server. A dedicated network address distributing server may also ensure that only one load balancing unit is in active operation mode at a time. The default network address is only transmitted to a non-active load balancing unit enabling the re-configuration if the address is not used in the network which latter case is present if the former active load balancing unit is defective.

The checking operations of the non-active load balancing units may be synchronized such that the checking operations of the different non-active load balancing unit do not interfere with each other. The checking operation may be timed by a timing table included in each load balancing unit. The interval between the checking operations of the different non-active load balancing units may be defined such that the checking operation of a non-active load balancing unit is finished before a new checking operation is started. This timely controlled sequence of checking operation may also ensure that only one load balancing unit is in active operation mode at the same time.

The interval of the checking operation may be for example an interval of 2 min to 5 min. The interval may have to be defined according to the needs of accessibility of the server system and the network load due to the checking requests. In case of simple checking request, such as a ping operation, the interval may be defined short since such checking requests do not generate considerable network load.

The re-configuration component 235 may comprise a re-starting component for re-starting a defective active load balancing unit 410. The re-starting component may be constituted by a data processing device or a program section executed at the non-active load balancing unit 210. The re-starting component may be realized by a server executable script or a program section executed at the server which includes the load balancing unit. After a re-start of a defective load balancing unit this load balancing unit is ready to take over again the load balancing of the system in case of a repeated failure of the active load balancing unit of the server system. Further, a re-start of the defective load balancing unit may ensure that only one active load balancing unit is operated to balance the load of the server system. The re-start of the defective active load balancing unit may also include a re-start of the processing server including the defective active load balancing unit. The re-start of the processing server may be necessary since a defective active load balancing unit may have an unfavorable effect on the operation of the processing server operation or the failure of the active load balancing unit may be caused by the failure of the processing server including the defective active load balancing unit.

In the following further embodiments of the non-active load balancing unit 210 interacting with a active load balancing unit 410 according to the invention will be described in more detail with respect to Fig. 4b and 4c. The following embodiments are distinguished by different realizations of the checking component involving further suitable components. A plurality of possible realizations may be conceivable. The following examples shall enlighten this aspect and shall not be interpreted as limiting.

The non-active load balancing unit 210 may comprise a request generating component 230 for generating a request, a request transmitting component 231 for transmitting this request to the active load balancing unit 410 and a receiving component 232 for receiving the corresponding request response from the active load balancing unit 410. The request generating component 230, the request transmitting component 231 and the request response receiving component 232 may be constituted by a data processing device or a program section executed at the non-active load balancing unit 210. The request generating component 230, the request transmitting component 231 and the request response receiving component 232 may be realized by a server executable script or a program section executed at the server which includes the load balancing unit. The non-active load balancing unit 210 involves the request generating component 230, the transmitting component 231 and the request response receiving component 232 to checks the operation of the active load balancing unit 410 from time to time or in regular time intervals. The respective request response indicates proper operation of the active load balancing unit 410. The request may be transmitted from the request transmitting component 231 via a communication link 2.2 to a respective receiving component of the active load balancing unit 410. Further the request response of the active load balancing unit 410 is re-transmitted via a communication link 2.3 to the request response receiving component of the non-active load balancing unit 210. The communication links may be established through the communication network connecting the processing server of the server system. A local area network connects the processing server of the server system. Naturally, all kind of a processing server connecting network may be able to establish the respective communication links between the active load balancing unit 410 and the non-active load balancing unit 210.

It may be possible to generate a request similar to a client request such as client 100 in order to check the operation of the active load balancing unit 410. The usage of a request similar to a client request may also be possible since this request is handled by the active load balancing unit 410 comparable with a client request which means that load balancing functions of the active load balancing unit 410 have to be executed in order to generate the respective request response in kind of a client request response. For example, the non-active load balancing unit 210 requests a certain service of the server system transmitting this request to the default address of the server system for serving. The non-active load balancing unit request is automatically routed to the active load balancing unit 410. Appropriately, the functions for load balancing of the server system of the active load balancing unit are all involved since the active load balancing unit can not distinguish between a client request, e.g. of a client 100, and the request generated and transmitted by the non-active load balancing unit 210. The active load balancing unit selects a processing server of the server system to serve the non-active load balancing unit request and transmits a re-direction notification to the non-active load balancing unit 210. The receiving component 232 for receiving the request response of the active load balancing unit 410 recognizes the request response.

The non-active load balancing unit 210 may be informed that the active load balancing unit 410 operates properly. Further, the non-active load balancing unit 210 may decode the request response and may check additionally whether the containing data are valid corresponding to the generated request or not. This may enable an additional check of the operation of the active load balancing unit 410 due to the selection capability.

The possibility of generating a certain request by the non-active load balancing unit 210 may also enable to generate a special L/B request instructing the active load balancing unit 410 to respond with a special L/B request response. The L/B request and the L/B request response may enable to exchange load balancing status information, particularly to transmit status information from the active load balancing unit 410 to the non-active load balancing units, like the non-active load balancing unit 210.

In the following a further embodiment of the non-active load balancing unit 210 interacting with a active load balancing unit 410 according to the invention will be described in more detail with respect to Fig. 4c. The following embodiment are distinguished by different realizations of the checking component involving further suitable components.

The load balancing process of the server system requires temporary status information of the server system, like processing load of each processing server that is sent to the active load balancing unit, but also cumulates temporary status information concerning the client requests, like client grouping information. This status information may be advantageous to be transmitted in regular intervals of time to the non-active load balancing unit 210. The transmitted status information may enable the non-active load balancing unit 210 after a re-configuration to an active load balancing unit to continue load balancing of the server system on the basis of the cumulated status information of the replaced former active load balancing unit. It may be noted, that the status information transmission enables the take over and carry out of the load balancing without disturbance of the active load balancing process of the server system or with at least only few disturbances apparent for the requesting clients, like client 100. The interruption of the server system due to the failure of the active load balancing unit may be shorten in case of transmitted load balancing status information to the replacement load balancing unit before failure. Particularly for example, since the replacement load balancing unit may not have to determine the status of the processing servers of the server system and related information necessary for balancing of the load.

In principle, a defective active load balancing unit may be recognized by a missing request response within a certain pre-defined period of time or by an invalid content of the request response.

The load balancing status information may comprise temporary information related to the load balancing of the server system. In principle, all temporary information which are accumulated during load balancing operation and of interest for proper load balancing may be included in the status information.

The load balancing status information may be based on at least one of the following points:
- list of current available processing servers and server related information like identity and/or location,
- list of current requesting clients and client related information like identity and/or location,
- list of current grouped clients,
- processing load of the servers or relative processing load of the servers, respectively.

Further not represented information may be possible to be included in the load balancing unit status information.

A list of current available processing server may be important in order to prevent the re-direction of a client request to a defective or currently not operated processing server. Further, server related information may be important due to changing content of the processing server which can be coded in the identity of the processing server or the location of the processing server due to a re-addressing or changing addresses of the processing server. A list of current requesting clients may be important for continuing balancing of the server system without disturbances in case of a exchange of the active load balancing unit. All related and available information on client may be additionally included in a list of current requesting clients. A list of grouped clients may allow to continue the grouping of the client with respect to certain allocated processing servers of the server system. The load of the processing servers of the system or the relative processing load of the servers, respectively, may be included. A relative processing load of the server may be used in combination of server systems set up by different processing server devices, i.e. for example processing server of different performance, called inhomogeneous server systems.

The non-active load balancing unit 210 may include several components for handling the special L/B request and L/B request response. The active load balancing unit has to include also corresponding components for responding to the L/B request with the L/B request response containing load balancing status information.

In principle, a defective active load balancing unit may be recognized by a missing request response within a certain pre-defined period of time or by an invalid content of the request response.

The request generating component 230 may be employed to generate the L/B request instructing the active load balancing unit 410 to generate and re-transmit the corresponding L/B request response. Further, the request transmitting component 231 transmits the generated L/B request to the active load balancing unit 410 and the request response receiving component 232 may receive the L/B request response from the active load balancing unit 410. The information contained in the L/B request response may be used for preparing the non-active load balancing unit 210 for take over and carry out of the load balancing of the server system. The request generating component 230, the request transmitting component 231 and the request response receiving component 232 may be constituted by a data processing device or a program section executed at the non-active load balancing unit 210. The request generating component 230, the request transmitting component 231 and the request response receiving component 232 may be realized by a server executable script or a program section executed at the server which includes the load balancing unit.

The active load balancing unit may include components to serve according to the transmitted requests of the non-active load balancing units, like the non-active load balancing unit 210. Therefore, a request receiving component 420 for receiving the L/B request from the non-active load balancing unit 210 may be included. Further, a suitable request response generating component 421 may be included. The L/B request may contain instructions for the request response generation. The L/B request response may contain temporary status information accumulated during the load balancing process operated by active load balancing unit 410. And further, a request response transmitting component 422 may be used for re-transmitting the L/B request response to the respective non-active load balancing unit, for example non-active load balancing unit 210. The L/B request receiving component 420, the request response generating component 421 and the request response transmitting component 422 may be constituted by a data processing device or a program section executed at the active load balancing unit 410. The L/B request receiving component 420, the request response generating component 421 and the request response transmitting component 422 may be realized by a server executable script or a program section executed at the server which includes the load balancing unit.

The request may be transmitted from the request transmitting component 231 via a communication link 2.2 to a respective receiving component of the active load balancing unit 410. Further the request response of the active load balancing unit 410 is re-transmitted via a communication link 2.3 to the request response receiving component of the non-active load balancing unit 210. The communication links may be established through the communication network connecting the processing server of the server system. A local area network connects the processing server of the server system. Naturally, all kind of a server connecting network may be able to establish the respective communication links between the active load balancing unit 410 and the non-active load balancing unit 210.

It may be possible to implement further functions and operations in the non-active load balancing unit 210. For example, the processing load of the server system which may be reported to the active load balancing unit of the server system may be also reported to the non-active load balancing unit 210 of the server system. The processing load may be reported from time to time or in regular intervals of time. Further implemented functions and operations of the non-active load balancing units may make it necessary to include further suitable components corresponding to the functions and operations to be carried out.

A software tool for balancing a processing load in a network may be provided. The software tool may comprise program portions for carrying out the operations and/or functions of the aforementioned active load balancing unit and non-active load balancing unit when the software tool is implemented in a computer program and/or executed.

A computer readable medium may be provided, having a computer program recorded thereon, where the program or server executable script are to make a computer or a system of data processing devices execute functions of the active operation mode and non-active operation mode of the load balancing unit included in the processing server. A computer readable medium can be a magnetic or optical or other tangible medium suitable for recording a respective program thereon, but can also be a signal, e.g., analog or digital, electromagnetic or optical, in which the program is embodied for transmission.

Further, a computer program product may be provided comprising the computer readable medium.

At the moment of the first start into services the load balancing units may operate in non-active operation mode. The following checking of operation of the active load balancing unit will lead to the re-configuration of a non-active load balancing unit to active operation mode. Hence, the server system including the load balancing units will configure automatically one of the non-active load balancing units to an active load balancing unit. Once an active load balancing unit operates in the server system the remaining non-active load balancing units continue the checking of the load balancing process and stay in the non-active operation mode until the active load balancing unit fails.

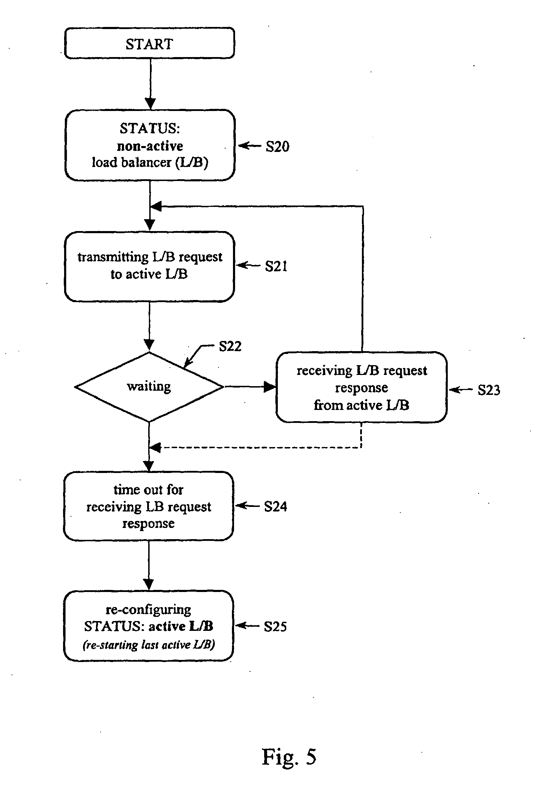

Fig. 5 shows a flow diagram illustrating a sequence of processing operations executed by a non-active load balancing unit with respect to an embodiment of the invention.

In an operation S20 the load balancing unit starts in the non-active operation mode. This may be the default operation mode of the load balancing units started the first time since the load balancing units are totally independent and therefore without information of the current status of the load balancing of the system at the start of the operation.

In an operation S21 the load balancing unit generates a request and transmits the request to the default address of the server system. This request is automatically routed to the active load balancing unit of the server system.

In an operation S22 the non-active load balancing unit awaits the response of the active load balancing unit according to the request transmitted in operation S21. The period of time valid for request responding may be configured with respect to the server system and the estimated response time of the active load balancing unit. It may have to be ensured that always only one active load balancing unit balances the load of the server system.

In an operation S23 a request response of the initiated request is received by the non-active load balancing unit within the period of time valid for request responding. An active load balancing unit of the server systems is available and accessible. The load balancing unit resumes in the non-active operation mode and initiates again a new request to the active load balancing units within a certain period of time. The non-active load balancing unit may use accordingly information contained in the request response. The sequence is stepped back to operation S21.

Moreover, a request response which is not corresponding to the request initiated by the non-active load balancing unit may be recognized. The invalid request response may lead to a continuation of the sequence of processing operations with operation S24.

The checking operations of the non-active load balancing units may be synchronized such that the checking operations of the different non-active load balancing units do not interfere with each other. The checking operation may be timed by a timing table included in each load balancing unit. The interval between the checking operations of the different non-active load balancing units may be defined such that the checking operation of a non-active load balancing unit is finished before a new checking operation is started. This timely controlled sequence of checking operation may also ensure that only one load balancing unit is in an active operation mode at a given time or at any time.

The interval of the checking operation may be for example an interval of 2 min to 5 min. The interval may have to be defined according to the needs of accessibility of the server system and the network load due to the checking requests. In case of simple checking request, such as a ping operation, the interval may be defined short since such checking requests do not generate considerable network load.

In an operation S24 a response of the initiated request is not received by the non-active load balancing unit within the period of time valid for request responding or the received request response may be invalid. In case of non load balancing due to failure of the active load balancing unit the server system can not be accessed by client requests.

In an operation S25 the non-active load balancing unit re-configures to an active load balancing unit, i.e. the operation mode is changed from non-active to active. The default address of the server system for first requests is passed over to the new active load balancing unit. A defective active load balancing unit may be re-started to restore proper operation of the load balancing unit.

The default network address of the system may be known by each load balancing unit. The active load balancing unit sets this default network address as valid and identifies itself as the respective network device to which first client requests directed to the default address of the server system are delivered. The non-active load balancing units may not set the default network address as valid so that first client requests are not delivered to the respective servers including the non-active load balancing units. In case of a re-configuration one of the non-active load balancing units takes over the duty and carries out the balancing of the load of the server system. This involves a setting valid of the default network address.

Further, a network address distributing server may report the default network address to the load balancing units in case of a re-configuration. Correspondingly, a re-configuration involves a request transmission of a re-configuring non-active load balancing unit to this dedicated server and the server transmits the default address to the re-configuring non-active load balancing unit. This may enable the re-configuring non-active load balancing unit to set the default address so that client requests are automatically routed to the re-configured new active load balancing server. A dedicated network address distributing server may also ensure that only one load balancing unit is in active operation mode at a time. The default network address is only transmitted to a non-active load balancing unit enabling the re-configuration if the address is not used in the network which latter case is present if the former active load balancing unit is defective.

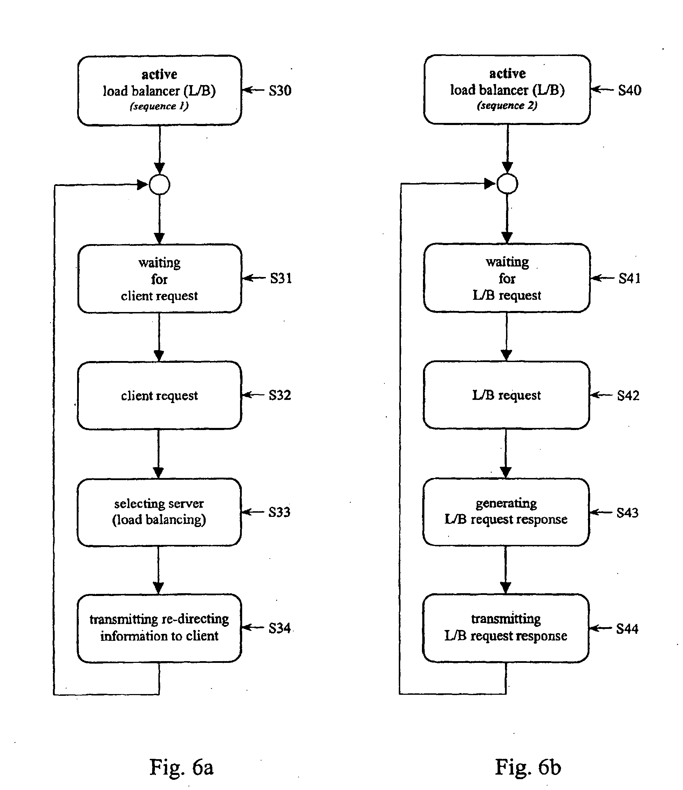

The re-configuration of a load balancing unit to active operation mode starts the load balancing process of the server system operated by the respective re-configured load balancing unit. The active load balancing unit may perform the load balancing of the server system and also may be checked by the remaining non-active load balancing units of the server system. This operation may be described in two separate processes operated simultaneously by the active load balancing unit. The following Fig. 6a and 6b illustrates the processes with respect to an active load balancing unit according to an embodiment of the invention. The description of the active load balancing unit operation represented by simultaneously executed separated process sequences may not limit the active load balancing unit to the described implementation of process realization. Different implementation may also possible for executing the operations of the processing sequences.

Fig. 6a illustrates a sequence of processing operations of the load balancing process with respect to the operation of an active load balancing unit according to an embodiment of the present invention.

In an operation S30 the load balancing unit is configured to the active operation mode. The active load balancing unit balances the processing load of the server system according to the above described embodiment of the present invention. This operation mode remains until the active load balancing unit fails and stops operation of the load balancing.

In an operation S31 the active load balancing unit waits for receiving client requests.

In an operation S32 a client request, for example transmitted from client 100, is received by the active load balancing unit.

In an operation S33 a server of the server system is selected by the active load balancing unit and the selection component of the active load balancing unit to serve the request of the client. The load balancing unit selects the processing server according to the information available by the active load balancing unit either from information contained in the client request, like identity, or available information of the server system, like processing server load.

The active load balancing unit generates a notification sequence for the client in order to instruct the client to re-direct the client request to the selected processing server. The re-direction of the client request to the processing server allows to establish a direct communication link between client and selected processing server without involving the active load balancing unit any more. The generated notification may contain additional information necessary to establish the direct communication link. At least a server address may be contained in the notification.

In an operation S34 the load balancing unit transmits the notification to the client to instruct the client to re-direct the client request directly to the selected processing server. The re-directed client transmits a request corresponding to the re-direction instructions directly to the selected processing server and may establish a direct communication link for following data exchange due to following client requests. The active load balancing unit is only involved in case of a new client request from the client if the new request is addressed again to the default address of the server system. After transmitting of the notification to the client the active load balancing unit waits in the following in order to process a next client request. The processing sequence is continued with operation S31.

A simultaneous sequence to serve the checking request of non-active load balancing units may have to be set up in course of checking requests of non-active load balancing units which may be not similar to client requests. In case of checking requests generated by the non-active load balancing units similar to client requests the above described processing sequence may handle such requests and re-transmits re-direction notifications equal to re-direction notifications according to client requests. In case of certain dissimilar checking requests generated by the non-active load balancing units the active balancer unit may handle these kind of requests by a separate processing sequence operated simultaneously to the client request processing sequence.

Fig. 6b illustrates a sequence of processing operations of the checking process with respect to the operation of an active load balancing unit according to an embodiment of the present invention.

In an operation S40 the load balancing unit is configured to the active operation mode. The active load balancing unit balances the processing load of the server system according to the above described embodiment of the present invention. This operation mode remains until the active load balancing unit fails and stops operation of the load balancing.

In an operation S41 the active load balancing unit waits for receiving requests generated to check the operation of the active load balancing unit.

In an operation S42 a request transmitted from a non-active load balancing unit, for example transmitted from the non-active load balancing unit 210, is received by the active load balancing unit.

In an operation S43 the active load balancing unit generates a request response according to the respective request of the non-active load balancing unit. According to the above described embodiments of the invention the request may instruct the active load balancing unit to transmit certain status information to check the operation of the active load balancing unit as well as to transfer temporary status information of the load balancing process in order to enable the non-active load balancing unit to take over and carry out the load balancing if necessary.

Therefore, the load balancing status information may include at least one of the following points:
- list of current available processing servers and server related information like identity and/or location,
- list of current requesting clients and client related information like identity and/or location,
- list of current grouped clients,
- processing load of the servers or relative processing load of the servers, respectively.

In an operation S44 the request response is re-transmitted to the respective non-active load balancing unit. The processing sequence is continued with operation S41.

Naturally, further simultaneous processing sequences may be operated by the active load balancing unit in order to enable the load balancing of the server system. For example, the processing load of each processing server of the server system may have to be determined by the active load balancing unit. The determination of the processing server load may be also handled by a request and request response method wherein both the active load balancing unit and the processing servers have to include several components for serving corresponding requests and request responses. Moreover, the active load balancing unit may check similarly the accessibility of the processing servers, for example in a way comparable to the checking of the active load balancing unit by the non-active load balancing units.

As a today's standard the internet protocol (IP) is used to transmit data over computer networks. A protocol for transmitting data packets through communication networks defines the encapsulation of the raw data sequence. To transmit data packets through communication networks addresses of the transmitting network device and receiving network device are coded in addition to the data sequence within the data packets according to the used protocol. According to the internet protocol each processing server has a unique world wide valid address known as internet protocol (IP) address. Clients requesting services of a dedicated processing server use the and to enable routing of the exchanged data. A server system may have defined a default network address in order to provide the service of the server system by a single network address. The assignment to single processing servers of the server system may be provided by distributing devices like load balancing units of the server system. Further, data packets according to the internet protocol may contain a port number in addition to the IP address. The port number may provide access to different services of a processing server since the addressed network device may distinguish the purpose of the data packets by the contained port number.

The utilization of the internet protocol (IP) and the corresponding IP addresses to enable access to a dedicate processing device is not limiting. Other transfer protocols and corresponding addressing methods thereof can be used to realize client request routing to a certain processing server. Commonly, internet protocol is used for data exchange over networks which is therefore suitable to be involved in an embodiment with respect to the method of the invention.

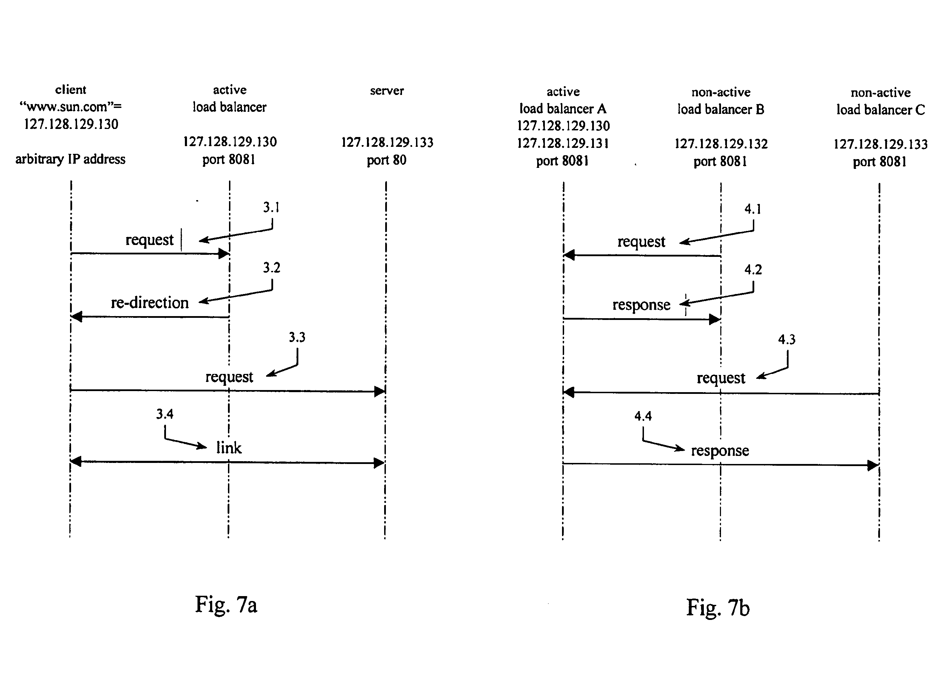

The following further embodiment will be described with reference to the internet protocol (IP) and the internet protocol (IP) addressing method, respectively. Fig. 7a illustrates a sequence of operations of the communication between client, active load balancing unit and processing server with respect to a further embodiment of the invention. The client may have assigned an arbitrary IP address, the active load balancing unit may have assigned the IP address "127.128.129.130" and may be accessed via port 8081 of the IP stack. The IP address of the active load balancing unit is both the default address of the server system and the IP address of the respective active load balancing unit. This address assignment ensures that client requests are always routed to the active load balancing unit and the server system may be accessed by one unique world wide valid address independently of the real number of single processing server which are comprised by the server system. The processing server included in Fig. 7a may have assigned the IP address "127.128.129.133" wherein server services maybe accessed via port 80 of the IP stack.

The processing server represent an arbitrary number of processing servers of the server system and the client represent an arbitrary number of requesting clients. Moreover each processing server includes a load balancing unit wherein one of the load balancing unit operates in active operation mode.

The client may direct a client request to a server system known by the default name "www.sun.com". This default name may be converted to a IP address using dedicated server accessible by the internet. Domain name server (DNS) provide the capability to convert clear-text addresses, such like "www.sun.com", to the respective default IP address, herein "127.128.129.130".

In an operation 3.1 the client may generate a client request and transmits the client request to the network device identified by the IP address "127.128.129.130". Therefore, the client request is transmitted to the active load balancing unit of the server system identified by clear-text default address "www.sun.com" since the default address of the server system is assigned to the active load balancing unit of the server system. Furthermore, the request may be directed to port 8081 of the active load balancing unit in order to be identified as a first client request which may have to be processed by the active load balancing unit.

In an operation 3.2 the active load balancing unit may have selected a certain processing server for serving the client request. The active load balancing unit may generate a re-direction notification instructing the client to transmit a client request to the selected processing server. The re-direction notification may contain IP the address of the selected processing server, for example with reference to Fig. 7a the IP address "127.128.129.133" on port 80.

In an operation 3.3 the client may have received the re-direction notification and transmits an corresponding client request to the selected processing server. The access to a different port of the IP stack may be advantageous because the selected processing server accessed by the IP address "127.128.129.133" maybe the processing server including the active load balancing unit. Using of different ports for serving load balancing and server services may make it easier to distinguish client request directed to the active load balancing unit and client request directed to a selected dedicated processing server of the server system.

In an operation 3.4 the selected processing server and client may be able to establish a communication link in order to exchange data packets without involving the active load balancing unit of the server system any more since the client is informed of the IP address of the selected processing server and only client request directed to the default address of the server system are processed by the active load balancing unit.

The following further embodiment will be also described with reference to the internet protocol (IP) and the internet protocol (IP) addressing method, respectively. Fig. 7b illustrates a sequence of operations of the communication between active load balancing unit A and two non-active load balancing units according to a further embodiment of the invention. The load balancing units represent an arbitrary number of load balancing units included in the processing servers of the server system.

The active load balancing unit A may assigned the IP address "127.128.129.130" which is the default address of the server system at the same time. Again, the active load balancing unit A may be accessed by the port 8081 of the IP stack. Moreover, the active load balancing unit A may be included in the processing server which has assigned the IP address "127.128.129.131" and may be accessed by the IP stack port 80. Further, the non-active load balancing units may be not addressed by own dedicated IP addresses but via the IP addresses of the respective processing server which included the non-active load balancing units. Therefore, the non-active load balancing unit B or the corresponding processing server, respectively, may have assigned the IP address "127.128.129.132" and the non-active load balancing unit C or the corresponding processing server, respectively, may have assigned the IP address "127.128.129.133". Both non-active load balancing units may be also accessed via IP stack port 8081.

In an operation 4.1 the non-active load balancing unit B may transmit a checking request to the active load balancing unit A. The request is addressed to the default IP address of the server system which is assigned to the active load balancing unit A. The request may be addressed to IP stack port 8081 to indicate that the request is directed to the active load balancing unit A of the respective processing server including the active load balancing unit A.

In an operation 4.2 the active load balancing unit A may re-transmit a corresponding request response to the non-active load balancing unit B. This request response may be addressed to the IP address of the processing server including the non-active load balancing unit B but directed to port 8081 in order to address the non-active load balancing unit B of the processing server and to separate the request response from client request directed to the same IP address but directed to the IP stack port 80.

In an operation 4.3 the non-active load balancing unit C may transmit a checking request to the active load balancing unit A. The request is addressed to the default IP address of the server system which is assigned to the active load balancing unit A. The request may be addressed to IP stack port 8081 to indicate that the request is directed to the active load balancing unit A of the respective processing server including the active load balancing unit A.

In an operation 4.4 the active load balancing unit A may re-transmit a corresponding request response to the non-active load balancing unit C. This request response may be addressed to the IP address of the processing server including the non-active load balancing unit C but directed to port 8081 in order to address the non-active load balancing unit C of the processing server and to separate the request response from client request directed to the same IP address but directed to the IP stack port 80.

The request responses may be expected by the respective non-active load balancing units within a certain pre-defined period of time. After exceeding of this period of time the respective non-active load balancing unit may initiate a re-configuration process due to the assumption that the defective active load balancing unit is defective. The period of time may be based on a typically request response duration of time of the active load balancing unit which may be extended due to high load caused by a high number of requesting clients.

The non-active load balancing units may initiate the checking of the operation of the active load balancing unit within a certain re-defined period of time. The checking of the operation may be performed in regular intervals of time. This period of time may be chosen with regard to the necessity of accessibility of the server system.

In the following the co-operation of load balancing unit A, load balancing unit B and load balancing unit C will be extended to the case of a failure of the active load balancing unit and the replacement thereof by a non-active load balancing unit.

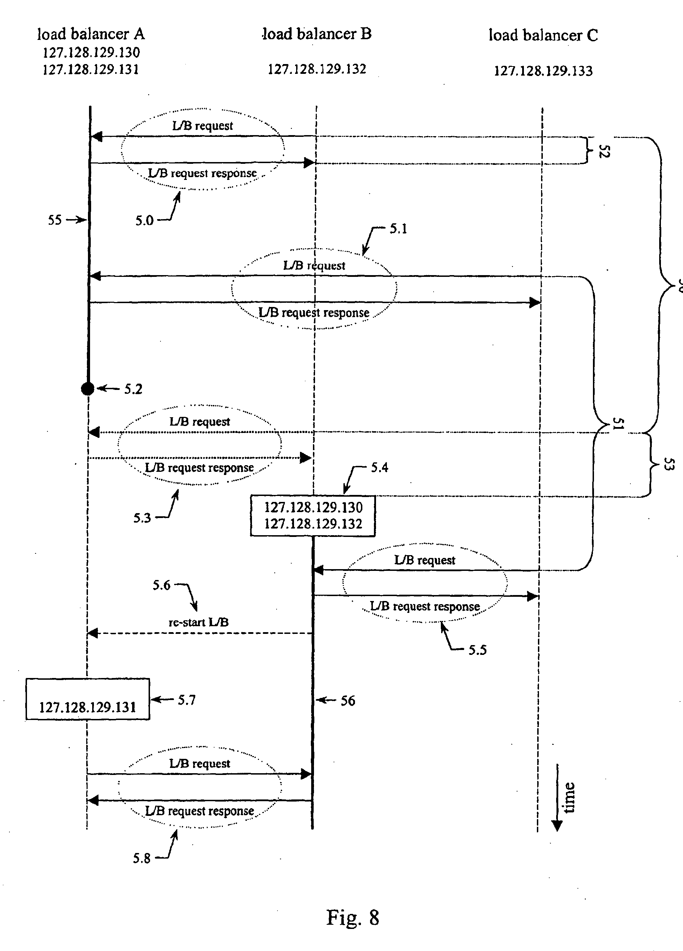

Fig. 8 illustrates a sequence of operations of the communication between an active load balancing unit and two non-active load balancing units in case of a failure of the active load balancing unit with respect to a further embodiment of the invention. The load balancing units represent an arbitrary number of load balancing units included in the processing servers of the server system.

The operations and communication between the load balancing unit are carried out in a timely sequence. The timely sequence may be read form the diagram top to the bottom.

At the beginning load balancing unit A may be the active load balancing unit of the server system indicated in Fig. 8 by bolded line 55 which illustrates the period of time of active operation mode of the load balancing unit A. In accordance with Fig. 7b the active load balancing unit A may have assigned the default IP address "127.128.129.130" of the server system. Further, the active load balancing unit may be included in a processing server which may have assigned the IP address "127.128.129.131". The non-active load balancing units B and C are included in respective processing servers which may have assigned the IP addresses "127.128.129.132" and "127.128.129.133", respectively. The load balancing units may be accessed using the IP stack port 8081 wherein the respective processing servers may be accessed using the IP stack port 80.

In an operation 5.0 and 5.1 the non-active load balancing unit B and the non-active load balancing unit C check the active load balancing unit A by transmitting requests to the active load balancing unit A and receiving request responses therefrom. The checking process is described in detail with respect to Fig. 7b. The typical period of time between checking request of a non-active load balancing unit and corresponding request response of an active load balancing unit is referenced by reference numeral 52. The period of repetition may be illustrated by reference numeral 50 and 51, respectively.

At the moment 5.2 it may be assumed that the active load balancing unit A fails. Firstly, a failure of the active load balancing unit A may be unnoticed by the non-active load balancing units B and C.

At the end of the period of repetition 50 the non-active load balancing unit B may transmit again a checking request to the load balancing unit A assumed to be in active operation mode in an operation 5.3. Due to the failure of the load balancing unit A the request may not be received by an active load balancing unit and thus no request response may be received by the non-active load balancing unit B.

A re-configuration of the non-active load balancing unit B may be initiated with the passing of a certain pre-defined period of time 53. At the end of the period of time 53 the non-active load balancing unit B may re-configure to active operation mode. This re-configuration may involve the assigning of the default IP address of the server system to the load balancing unit B, indicated by operation 5.4. The load balancing unit B may take over and carry out the load balancing of the server system after re-configuration, indicated by the bold line 56 which illustrates the period of time of active operation mode of the load balancing unit B.

At the end of the period of repetition 51 the non-active load balancing unit C may transmit again a checking request to the active load balancing unit of the system which is now represented by the re-configured load balancing unit B. This checking process is illustrated in Fig. 8 in operation 5.5. Since the default IP address of the server system may be assigned always to the active load balancing unit of the server system the checking request of the non-active load balancing unit C is automatically routed to the re-configured active load balancing unit B.

In an operation 5.6 it may be possible that the re-configured active load balancing unit B re-starts remotely the defective load balancing unit A.

In an operation 5.7 the defective load balancing unit A may be re-started and may begin operating in non-active operation mode. Therefore, the non-active load balancing unit A may have assigned only the IP address of the processing server which includes the non-active load balancing unit A.

In an operation 5.8 the non-active load balancing unit may check the active load balancing unit B of the server system according to the above described checking process.

The described embodiment enlightens the capability of the replacement process due to the implementation of load balancing units in each processing server of a server system. The operation of the non-active load balancing units simultaneously to the operation of the active load balancing unit may provide the possibility to replace a defective active load balancing unit of the server system within a short period of time. The number of non-active load balancing units ensures that the load balancing process of the server system may always be taken over and carried out by a proper operating load balancing unit.

Network routing devices are often included in networks enabling a high number of communication links. The routing device may enable to reduce the network load of parts of the communication network. It may be possible to connect processing servers of a server system via a routing device to the outer network in order to limit the number of data packets received by the processing servers of the server system only to data packets designated to the respective processing server. A network routing device may be defined as a device providing a main network connecting part transmitting and receiving all incoming and outgoing data packets. The routing device distributes the data packets over further network connecting parts. The further network connecting parts receive and transmit only data packets of network devices connected to the respective network connecting parts.

Fig. 9 shows a block diagram illustrating a server system consisting of processing servers each including a load balancing unit and each separately connected to a network routing device according to a further embodiment of the invention. The processing servers represent an arbitrary number of processing servers each including a load balancing unit. The network routing device 500 may connect the processing servers 400, 300 and 200 to the outer network. The main connecting part of the network routing device 500 may be indicated by arrow 6.1. The total network traffic from and to the server system may be directed through the main network connecting part of the network routing device 500. The processing servers 400, 300 and 200 may be connected to the network routing device via the network connecting parts X, Y and Z, respectively. The respective network communication links are indicated by the arrows 6.2, 6.3 and 6.4.

The processing server 400 may have assigned the IP address "127.128.129.131", the processing server 300 may have assigned the IP address "127.128.129.132" and the processing server 200 may have assigned the IP address "127.128.129.133". The default network IP address "127.128.129.130" may be assigned to the active load balancing unit of the server system. The network routing device 500 may pass through the network connecting part X only data packets addressed to processing server 400. Further, the network routing device may pass through the network connecting part Y only data packets addressed to processing server 300 and the network routing device may pass through the network connecting part Z only data packets addressed to processing server 200. Therefore, the network routing device 500 maintains a list of network devices connected to the different network connecting parts.

It may be assumed that the processing server 300 may include a defective load balancing unit 310. The load balancing unit 410 of processing server 400 may be re-configured, illustrated by arrow 6.10, to take over and carry out the load balancing process of the server system. Therefore, the default network address assigned to the active load balancing unit is passed over from processing server 300 to processing server 400. The network routing device 500 passes all data packets addressed to the default server system address via network connecting port Y to processing server 300 since the processing server included the active load balancing unit 310 until the active load balancing unit 310 fails and the load balancing unit 410 took over the load balancing process. The network routing device 500 is not involved in the re-configuration process of the load balancing units of the server system and the passing of the default address for defective load balancing unit 310 to re-configured load balancing unit 410 is unrecognized by the network routing device 500.

The active load balancing unit 410 may comprise network device a re-configuration component for re-configuring network devices routing network communication, indicated by arrow 6.20. The network device re-configuration component may be constituted by a data processing device or a program section executed at the active load balancing unit 410. The network device reconfiguration component may be realized by a server executable script or a program section executed at the server which includes the load balancing unit. The re-configuration may perform the remove of the default server system address or active load balancing unit, respectively, from the address table maintained for network connecting part Y and the enlargement of the address table maintained for network connecting part X.

It shall be noted that the components included in the load balancing unit for performing functions and operations according to an embodiment of the invention may be constituted by a data processing device which may be comprised by the load balancing unit or the processing server including the load balancing unit. Further, the components may be constituted by a code section for executing on one or a plurality of data processing devices containing instructions for carrying out the necessary processing operations for performing functions and operations. Moreover, the components may be constituted by a portion of the processing server of by a portion of the load balancing unit.

According to another embodiment of the invention, a load balancing unit may - supplementary to the combination of features defined by the corresponding independent claim - have the following structural elements:
1) Load balancing unit for balancing a processing load in a network, operating in a first operation mode as an active load balancing unit and in a second operation mode as a non-active load balancing unit, comprising:
   - a code section containing instructions for receiving a client request from a client,
   - a code section containing instructions for selecting one of a plurality of processing servers for serving said client request and
   - a code section containing instructions for establishing a communication link between said client and said selected processing server.
2) Load balancing unit for balancing a processing load in a network according to 1), wherein said code section containing instructions for establishing a communication link further comprises:
   - a code section containing instructions for generating a re-direction message and
   - a code section containing instructions for transmitting said re-direction message to said client.
3) Load balancing unit for balancing a processing load in a network according to 1) or 2), wherein said active load balancing unit comprises:
   - a code section containing instructions for authorizing said client.
4) Load balancing unit for balancing a processing load in a network according anyone of 1) - 3), wherein said non-active load balancing unit further comprises:
   - a code section containing instructions for checking operation of said active load balancing unit.
5) Load balancing unit for balancing a processing load in a network according to 4), wherein said non-active load balancing unit further comprises:
   - a code section containing instructions for re-configuring said non-active load balancing unit to said active load balancing unit .
6) Load balancing unit for balancing a processing load in a network according to 4) or 5), wherein said code section containing instructions for checking operation of said active load balancing unit further comprises:
   - a code section containing instructions for generating a request for said active load balancing unit and
   - a code section containing instructions for transmitting said request to said active load balancing unit and
   - a code section containing instructions for receiving a request response from said active load balancing unit.
7) Load balancing unit for balancing a processing load in a network according to 6), wherein said active load balancing unit further comprises:
   - a code section containing instructions for receiving said request from said non-active load balancing unit,
   - a code section containing instructions for generating a request response and
   - a code section containing instructions for transmitting said request response to said non-active load balancing unit.
8) Load balancing unit for balancing a processing load in a network according to anyone of 1) - 7), further comprising:
   - a code section containing instructions for re-configuring network devices routing network communication.

Although the present invention has been described in terms of the presently preferred embodiments, it is to be understood that such disclosure is not to be interpreted as limiting. Various alternations and modifications will no doubt become apparent to those skilled in the art after reading the above disclosure.

## Claims

1. Method for balancing a processing load in a network having a plurality of processing servers (200, 300, 400) each including a load balancing unit (210, 310, 410), wherein each load balancing unit (210, 310, 410) is operable with two operation modes, wherein at least one of said load balancing units is an active load balancing unit (410) connected to said network and said remaining other load balancing units are non-active load balancing units (210, 310) ;
wherein said active load balancing unit (410) carries out:
- receiving a request from a client (100) via said network,
- selecting one of said plurality of servers (200, 300, 400) for processing said client request, and
- establishing a communication link between said client (100) and said selected processing server (200, 300 or 400);
wherein said non-active load balancing units (210, 310) carry out:
- checking correct operation of said active load balancing unit (410), **characterized in that** said checking correct operation comprises generating a request for said checking, transmitting said request to said active load balancing unit (410) and receiving a request response from said active load balancing unit (410).

2. Method for balancing a processing load in a network according to claim 1, wherein establishing said communication link between said client (100) and said selected processing server (200 or 300 or 400) further comprises:
- generating a re-direction message instructing said client (100) to transmit a request to said selected processing server (200 or 300 or 400) and
- transmitting said re-direction message to said client (100).

3. Method for balancing a processing load in a network according to claim 1 or claim 2, wherein said active load balancing unit (410) authorizes said client request.

4. Method for balancing a processing load in a network according to anyone of the preceding claims, wherein said selecting operation of one of said plurality of processing servers (200, 300, 400) for serving said client request is based on at least one out of a group comprising:
- a server load or a relative server load,
- a server content,
- a client identity,
- a server identity,
- a client location, and
- a server location.

5. Method for balancing a processing load in a network according to anyone of the preceding claims, wherein said non-active load balancing units (210, 310) carry out:
- re-configuring of said non-active operation mode of at least one of said previously non active load balancing units into an active operation mode.

6. Method for balancing a processing load in a network according to anyone of the preceding claims, wherein said active load balancing unit (410) carries out:
- receiving said request from a non-active load balancing unit (210,310),
- generating a request response, and
- transmitting said request response to said non-active load balancing unit (210, 310).

7. Method for balancing a processing load in a network according to according to anyone of the preceding claims, wherein said request of said non-active load balancing unit (210, 310) to said active load balancing unit (410) is a certain load balancer request.

8. Method for balancing a processing load in a network according to according to claim 7, wherein said request response of said active load balancing unit (410) to said non-active load balancing unit (210, 310) is a certain load balancer request response.

9. Method for balancing a processing load in a network according to claim 8, wherein said load balancer request response additionally contains an information relating to at least one out of a group comprising:
- current available servers,
- server related information,
- currently requesting clients,
- client related information,
- currently grouped clients, and
- load of said servers or relative load of said servers.

10. Method for balancing a processing load in a network according to anyone of the preceding claims, wherein said load balancing unit (210, 310) further carrier out:
- re-starting of a load balancing unit.

11. Method for balancing a processing load in a network according to anyone of the preceding claims, wherein said non-active load balancing unit (210, 310) further carrier out:
- re-configuring of network devices routing network communication.

12. Computer program product comprising program code portions stored on a computer readable medium for carrying out the method of anyone of the claims 1 to 11, when said computer program product is executed on a computer or network device.

13. Load balancing unit for balancing a processing load in a network having at least two operating modes, wherein in a first operation mode it is an active load balancing unit and in a second operation mode it is a non-active load balancing unit, said load balancing unit for being included in a processing server;
said load balancing unit comprising:
- a load balancer receiving component (411) for receiving a request from a client (100),
- a server selection component (413) for selecting one of a plurality of processing servers for serving said client request,
- a load balancer communication component (412) for establishing a communication link between said client (100) and said selected processing server, and
- a checking component for checking operation of another load balancing unit (410) in said network,
**characterized in that** said checking component is comprising:
- a request generating component (230) for generating a request for said another load balancing unit (410),
- a request transmitting component (231) for transmitting said request to said another load balancing unit (410), and
- a request response receiving component (232) for receiving a request response from said another load balancing unit (410).

14. Load balancing unit for balancing a processing load in a network according to claim 13,
wherein said load balancer communication component (412) further comprises:
- a component for generating a re-direction message and
- a component for transmitting said re-direction message to said client (100).

15. Load balancing unit for balancing a processing load in a network according to claim 13 or claim 14, wherein said load balancing unit (410) comprises an authorizing component for authorizing said client (100).

16. Load balancing unit for balancing a processing load in a network according to anyone of the claims 13 to 15, wherein said load balancing unit bases the selection of the processing server on at least one out of a group comprising:
- a server load or a relative server load,
- a server content,
- a client identity,
- a server identity,
- a client location, and
- a server location.

17. Load balancing unit for balancing a processing load in a network according to anyone of the claims 13 to 16, further comprising:
- a re-configuration component (235) for re-configuring a non-active load balancing unit (210,310) into an active load balancing unit (410).

18. Load balancing unit for balancing a processing load in a network according to anyone of the claims 13 to 17, wherein said load balancing unit further comprises:
- a request receiving component (420) for receiving said request from another load balancing unit (210, 310),
- a request response generating component (421) for generating a request response, and
- a request response transmitting component (422) for transmitting said request response to said another load balancing unit (210, 310).

19. Load balancing unit for balancing a processing load in a network according to claim 18,
wherein said request of said load balancing unit (210, 310) to said another load balancing unit (410) is a certain load balancer request.

20. Load balancing unit for balancing a processing load in a network according to claim 19,
wherein said request response of said another load balancing unit (410) to said load balancing unit (210, 310) is a certain load balancer request response.

21. Load balancing unit for balancing a processing load in a network according to claim 20,
wherein said load balancer request response additionally contains an information relating to at least one of a group comprising:
- currently available servers,
- server related information,
- currently requesting clients,
- client related information,
- current grouped clients, and
- load of the servers or relative load of the servers.

22. Load balancing unit for balancing a processing load in a network according to anyone of the claims 13 to 21, further comprising:
- a re-starting component for re-starting a load balancing unit.

23. Load balancing unit for balancing a processing load in a network according to anyone of the claims 13 to 22, further comprising:
- a network device re-configuration component for re-configuring network devices routing network communication.

24. Server including a load balancing unit for balancing a processing load in a network according to anyone of the claims 13 to 23.

25. System of a plurality of processing servers according to claim 24.

## Patentansprüche

1. Verfahren zum Verteilen einer Verarbeitungslast in einem Netzwerk mit mehreren Verarbeitungs-Servern (200, 300, 400), von denen jeder eine Lastverteiler-Einheit (210, 310, 410) einschließt, wobei jede Lastverteiler-Einheit (210, 310, 410) mit zwei Betriebsmodi betreibbar ist, wobei mindestens eine der Lastverteiler-Einheiten eine aktive Lastverteiler-Einheit (410) ist, die mit dem Netzwerk verbunden ist, und die restlichen anderen Lastverteiler-Einheiten nicht-aktive Lastverteiler-Einheiten (210, 310) sind,
wobei die aktive Lastverteiler-Einheit (410) ausführt:
- Empfangen einer Anforderung von einem Client (100) über das Netzwerk;
- Auswählen eines der mehreren Server (200, 300, 400) zum Verarbeiten der Client-Anforderung; und
- Aufbauen einer Kommunikationsverbindung zwischen dem Client (100) und dem gewählten Verarbeitungs-Server (200, 300 oder 400);
wobei die nicht-aktiven Lastverteiler-Einheiten (210, 310) ausführen:
- Überprüfen des korrekten Betriebs der aktiven Lastverteiler-Einheit (410);
**dadurch gekennzeichnet, dass** der Vorgang des Überprüfens des korrekten Betriebs umfasst:
- Erzeugen einer Anforderung für das Überprüfen, Übertragen der Anforderung an die aktive Lastverteiler-Einheit (410) und Empfangen einer Anforderungs-Antwort von der aktiven Lastverteiler-Einheit (410).

2. Verfahren zum Verteilen einer Verarbeitungslast in einem Netzwerk nach Anspruch 1, wobei das Aufbauen der Kommunikationsverbindung zwischen dem Client (100) und dem gewählten Verarbeitungs-Server (200 oder 300 oder 400) weiter umfasst:
- Erzeugen einer Umleitungs-Nachricht, welche den Client (100) anweist, eine Anforderung an den gewählten Verarbeitungs-Server (200 oder 300 oder 400) zu übertragen; und
- Übertragen der Umleitungs-Nachricht an den Client (100).

3. Verfahren zum Verteilen einer Verarbeitungslast in einem Netzwerk nach Anspruch 1 oder 2, wobei die aktive Lastverteiler-Einheit (410) die Client-Anforderung autorisiert.

4. Verfahren zum Verteilen einer Verarbeitungslast in einem Netzwerk nach irgendeinem der vorhergehenden Ansprüche, wobei der Auswahlvorgang eines der mehreren Verarbeitungs-Server (200, 300, 400) zum Bedienen der Client-Anforderung auf mindestens einem aus einer Gruppe basiert, welche umfasst:
- eine Serverlast oder eine relative Serverlast;
- ein Serverinhalt;
- eine Client-Identität;
- eine Server-Identität;
- ein Client-Standort; und
- ein Server-Standort.

5. Verfahren zum Verteilen einer Verarbeitungslast in einem Netzwerk nach irgendeinem der vorhergehenden Ansprüche, wobei die nicht-aktiven Lastverteiler-Einheiten (210, 310) ausführen:
- Neukonfigurieren des nicht-aktiven Betriebsmodus von mindestens einer der vorher nicht-aktiven Lastverteiler-Einheiten in einen aktiven Betriebsmodus.

6. Verfahren zum Verteilen einer Verarbeitungslast in einem Netzwerk nach irgendeinem der vorhergehenden Ansprüche, wobei die aktive Lastverteiler-Einheit (410) ausführt:
- Empfangen der Anforderung von einer nicht-aktiven Lastverteiler-Einheit (210, 310);
- Erzeugen einer Anforderungs-Antwort; und
- Übertragen der Anforderungs-Antwort an die nicht-aktive Lastverteiler-Einheit (210,310).

7. Verfahren zum Verteilen einer Verarbeitungslast in einem Netzwerk nach irgendeinem der vorhergehenden Ansprüche, wobei die Anforderung der nicht-aktiven Lastverteiler-Einheit (210, 310) an die aktive Lastverteiler-Einheit (410) eine bestimmte Lastverteiler-Anforderung ist.

8. Verfahren zum Verteilen einer Verarbeitungslast in einem Netzwerk nach Anspruch 7, wobei die Anforderungs-Antwort der aktiven Lastverteiler-Einheit (410) an die nicht-aktive Lastverteiler-Einheit (210, 310) eine bestimmte Lastverteiler-Anforderungs-Antwort ist.

9. Verfahren zum Verteilen einer Verarbeitungslast in einem Netzwerk nach Anspruch 8, wobei die Lastverteiler-Anforderungs-Antwort zusätzlich eine Information enthält, die sich auf mindestens eine aus einer Gruppe bezieht, welche umfasst:
- derzeit verfügbare Server;
- Server-bezogene Information;
- derzeit anfordernde Clients;
- Client-bezogene Information;
- derzeit gruppierte Clients; und
- Last der Server oder relative Last der Server.

10. Verfahren zum Verteilen einer Verarbeitungslast in einem Netzwerk nach irgendeinem der vorhergehenden Ansprüche, wobei die nicht-aktive Lastverteiler-Einheit (210, 310) weiter ausführt:
- Neustarten einer Lastverteiler-Einheit.

11. Verfahren zum Verteilen einer Verarbeitungslast in einem Netzwerk nach irgendeinem der vorhergehenden Ansprüche, wobei die nicht-aktive Lastverteiler-Einheit (210, 310) weiter ausführt:
- Neukonfigurieren von Netzwerkvorrichtungen, welche Netzwerkkommunikation routen.

12. Computerprogrammprodukt, umfassend Programmcode-Abschnitte, gespeichert auf einem computerlesbaren Medium, um das Verfahren von irgendeinem der Ansprüche 1 bis 11 auszuführen, wenn das Computerprogrammprodukt auf einem Computer oder einer Netzwerkvorrichtung ausgeführt wird.

13. Lastverteiler-Einheit zum Verteilen einer Verarbeitungslast in einem Netzwerk mit mindestens zwei Betriebsmodi, wobei sie in einem ersten Betriebsmodus eine aktive Lastverteiler-Einheit ist und in einem zweiten Betriebsmodus eine nicht-aktive Lastverteiler-Einheit ist, wobei die Lastverteiler-Einheit dazu vorgesehen ist, in einem Verarbeitungs-Server eingeschlossen zu werden,
wobei die Lastverteiler-Einheit umfasst:
- eine Lastverteiler-Empfangskomponente (411) zum Empfangen einer Anforderung von einem Client (100);
- eine Server-Auswahlkomponente (413), um einen von mehreren Verarbeitungs-Servern auszuwählen, um die Client-Anforderung zu bedienen;
- eine Lastverteiler-Kommunikationskomponente (412) zum Aufbauen einer Kommunikationsverbindung zwischen dem Client (100) und dem gewählten Verarbeitungs-Server; und
- eine Überprüfungskomponente zum Überprüfen des Betriebs einer anderen Lastverteiler-Einheit (410) in dem Netzwerk;
**dadurch gekennzeichnet, dass** die Überprüfungskomponente umfasst:
- eine Anforderungs-Erzeugungskomponente (230) zum Erzeugen einer Anforderung für die andere Lastverteiler-Einheit (410);
- eine Anforderungs-Übertragungskomponente (231) zum Übertragen der Anforderung an die andere Lastverteiler-Einheit (410);
- eine Anforderungs-Antwort-Empfangskomponente (232) zum Empfangen einer Anforderungs-Antwort von der anderen Lastverteiler-Einheit (410).

14. Lastverteiler-Einheit zum Verteilen einer Verarbeitungslast in einem Netzwerk nach Anspruch 13, wobei die Lastverteiler-Kommunikationskomponente (412) weiter umfasst:
- eine Komponente zum Erzeugen einer Umleitungs-Nachricht; und
- eine Komponente zum Übertragen der Umleitungs-Nachricht an den Client (100).

15. Lastverteiler-Einheit zum Verteilen einer Verarbeitungslast in einem Netzwerk nach Anspruch 13 oder 14, wobei die Lastverteiler-Einheit (410) eine Autorisierungskomponente zum Autorisieren des Client (100) umfasst.

16. Lastverteiler-Einheit zum Verteilen einer Verarbeitungslast in einem Netzwerk nach irgendeinem der Ansprüche 13 bis 15, wobei die Lastverteiler-Einheit der Auswahl des Verarbeitungs-Servers mindestens eines aus einer Gruppe zugrunde legt, welche umfasst:
- eine Serverlast oder eine relative Serverlast;
- einen Serverinhalt;
- eine Client-Identität;
- eine Server-Identität;
- einen Client-Standort; und
- einen Server-Standort.

17. Lastverteiler-Einheit zum Verteilen einer Verarbeitungslast in einem Netzwerk nach irgendeinem der Ansprüche 13 bis 16, weiter umfassend:
- eine Neukonfigurations-Komponente (235) zum Neukonfigurieren einer nicht-aktiven Lastverteiler-Einheit (210, 310) in eine aktive Lastverteiler-Einheit (410).

18. Lastverteiler-Einheit zum Verteilen einer Verarbeitungslast in einem Netzwerk nach irgendeinem der Ansprüche 13 bis 17, wobei die Lastverteiler-Einheit weiter umfasst:
- eine Anforderungs-Empfangskomponente (420) zum Empfangen der Anforderung von einer anderen Lastverteiler-Einheit (210, 310);
- eine Anforderungs-Antwort-Erzeugungskomponente (421) zum Erzeugen einer Anforderungs-Antwort; und
- eine Anforderungs-Antwort-Übertragungskomponente (422) zum Übertragen der Anforderungs-Antwort an die andere Lastverteiler-Einheit (210, 310).

19. Lastverteiler-Einheit zum Verteilen einer Verarbeitungslast in einem Netzwerk nach Anspruch 18, wobei die Anforderung der Lastverteiler-Einheit (210, 310) an die andere Lastverteiler-Einheit (410) eine bestimmte Lastverteiler-Anforderung ist.

20. Lastverteiler-Einheit zum Verteilen einer Verarbeitungslast in einem Netzwerk nach Anspruch 19, wobei die Anforderungs-Antwort der anderen Lastverteiler-Einheit (410) an die Lastverteiler-Einheit (210, 310) eine bestimmte Lastverteiler-Anforderungs-Antwort ist.

21. Lastverteiler-Einheit zum Verteilen einer Verarbeitungslast in einem Netzwerk nach Anspruch 20, wobei die Lastverteiler-Anforderungs-Antwort zusätzlich eine Information enthält, die sich auf mindestens eine einer Gruppe bezieht, welche umfasst:
- derzeit verfügbare Server;
- Server-bezogene Information;
- derzeit anfordernde Clients;
- Client-bezogene Information;
- derzeit gruppierte Clients; und
- Last der Server oder relative Last der Server.

22. Lastverteiler-Einheit zum Verteilen einer Verarbeitungslast in einem Netzwerk nach irgendeinem der Ansprüche 13 bis 21, weiter umfassend:
- eine Neustart-Komponente zum Neustarten einer Lastverteiler-Einheit.

23. Lastverteiler-Einheit zum Verteilen einer Verarbeitungslast in einem Netzwerk nach irgendeinem der Ansprüche 13 bis 22, weiter umfassend:
- eine Neukonfigurations-Komponente für Netzwerkvorrichtungen zum Neukonfigurieren von Netzwerkvorrichtungen, welche Netzwerkkommunikation routen.

24. Server, einschließend eine Lastverteiler-Einheit zum Verteilen einer Verarbeitungslast in einem Netzwerk nach irgendeinem der Ansprüche 13 bis 23.

25. System von mehreren Verarbeitungs-Servern nach Anspruch 24.

## Revendications

1. Procédé pour équilibrer une charge de traitement dans un réseau ayant une pluralité de serveurs de traitement (200, 300, 400) chacun incluant une unité d'équilibrage de charge (210, 310, 410), dans lequel chaque unité d'équilibrage de charge (210, 310, 410) est exploitable avec deux modes de fonctionnement, dans lequel au moins une desdites unités d'équilibrage de charge est une unité d'équilibrage de charge active (410) connectée audit réseau et lesdites autres unités d'équilibrage de charge restantes sont des unités d'équilibrage de charge non actives (210, 310) ;
dans lequel ladite unité d'équilibrage de charge active (410) effectue :
- la réception d'une requête d'un client (100) via ledit réseau,
- la sélection d'un de ladite pluralité de serveurs (200, 300, 400) pour traiter ladite requête client, et
- l'établissement d'une liaison de communication entre ledit client (100) et ledit serveur de traitement sélectionné (200, 300 ou 400) ;
dans lequel lesdites unités d'équilibrage de charge non actives (210, 310) effectuent :
- la vérification du fonctionnement correct de ladite unité d'équilibrage de charge active (410), **caractérisé en ce que** ladite vérification du fonctionnement correct comprend la génération d'une requête pour ladite vérification, la transmission de ladite requête à ladite unité d'équilibrage de charge active (410) et la réception d'une réponse à la requête de ladite unité d'équilibrage de charge active (410).

2. Procédé pour équilibrer une charge de traitement dans un réseau selon la revendication 1, dans lequel l'établissement de ladite liaison de communication entre ledit client (100) et ledit serveur de traitement sélectionné (200 ou 300 ou 400) comprend en outre :
- la génération d'un message de redirection donnant pour instruction audit client (100) de transmettre une requête audit serveur de traitement sélectionné (200 ou 300 ou 400) et
- la transmission dudit message de redirection audit client (100).

3. Procédé pour équilibrer une charge de traitement dans un réseau selon la revendication 1 ou la revendication 2, dans lequel ladite unité d'équilibrage de charge active (410) autorise ladite requête client.

4. Procédé pour équilibrer une charge de traitement dans un réseau selon l'une quelconque des revendications précédentes, dans lequel ladite opération de sélection d'un de ladite pluralité de serveurs de traitement (200, 300, 400) pour prendre en charge ladite requête client est basée sur au moins un d'un groupe comprenant,
- une charge de serveur ou une charge de serveur relative,
- un contenu de serveur,
- une identité de client,
- une identité de serveur,
- une localisation de client, et
- une localisation de serveur.

5. Procédé pour équilibrer une charge de traitement dans un réseau selon l'une quelconque des revendications précédentes, dans lequel lesdites unités d'équilibrage de charge non actives (210, 310) effectuent :
- la reconfiguration dudit mode de fonctionnement non actif d'au moins une desdites unités d'équilibrage de charge précédemment non actives en un mode de fonctionnement actif.

6. Procédé pour équilibrer une charge de traitement dans un réseau selon l'une quelconque des revendications précédentes, dans lequel ladite unité d'équilibrage de charge active (410) effectue :
- la réception de ladite requête d'une unité d'équilibrage de charge non active (210, 310),
- la génération d'une réponse à la requête, et
- la transmission de ladite réponse à la requête à ladite unité d'équilibrage de charge non active (210, 310).

7. Procédé pour équilibrer une charge de traitement dans un réseau selon l'une quelconque des revendications précédentes, dans lequel ladite requête de ladite unité d'équilibrage de charge non active (210, 310) à ladite unité d'équilibrage de charge active (410) est une certaine requête d'équilibreur de charge.

8. Procédé pour équilibrer une charge de traitement dans un réseau selon la revendication 7, dans lequel ladite réponse à la requête de ladite unité d'équilibrage de charge active (410) à ladite unité d'équilibrage de charge non active (210, 310) est une certaine réponse à la requête d'équilibreur de charge.

9. Procédé pour équilibrer une charge de traitement dans un réseau selon la revendication 8, dans lequel ladite réponse à la requête d'équilibreur de charge contient en outre une information concernant au moins un d'un groupe comprenant :
- des serveurs disponibles actuels,
- une information liée au serveur,
- des clients actuellement demandeurs,
- une information liée au client,
- des clients actuellement groupés, et
- la charge desdits serveurs ou la charge relative desdits serveurs.

10. Procédé pour équilibrer une charge de traitement dans un réseau selon l'une quelconque des revendications précédentes, dans lequel ladite unité d'équilibrage de charge non active (210, 310) effectue en outre :
- le redémarrage d'une unité d'équilibrage de charge.

11. Procédé pour équilibrer une charge de traitement dans un réseau selon l'une quelconque des revendications précédentes, dans lequel ladite unité d'équilibrage de charge non active (210, 310) effectue en outre :
- la reconfiguration de dispositifs de réseau acheminant une communication de réseau.

12. Produit de programme informatique comprenant des parties de code de programme stockées sur un support lisible par ordinateur pour effectuer le procédé de l'une quelconque des revendications 1 à 11, lorsque ledit produit de programme informatique est exécuté sur un ordinateur ou dispositif de réseau.

13. Unité d'équilibrage de charge pour équilibrer une charge de traitement dans un réseau ayant au moins deux modes de fonctionnement, dans laquelle dans un premier mode de fonctionnement c'est une unité d'équilibrage de charge active et dans un deuxième mode de fonctionnement c'est une unité d'équilibrage de charge non active, ladite unité d'équilibrage charge devant être incluse dans un serveur de traitement ;
ladite unité d'équilibrage charge comprenant :
- un composant de réception d'équilibreur de charge (411) pour recevoir une requête d'un client (100),
- un composant de sélection de serveur (413) pour sélectionner un d'une pluralité de serveurs de traitement pour prendre en charge ladite requête client,
- un composant de communication d'équilibreur de charge (412) pour établir une liaison de communication entre ledit client (100) et ledit serveur de traitement sélectionné, et
- un composant de vérification pour vérifier le fonctionnement d'une autre unité d'équilibrage de charge (410) dans ledit réseau, **caractérisé en ce que** ledit composant de vérification comprend :
- un composant de génération de requête (230) pour générer une requête pour ladite une autre unité d'équilibrage de charge (410),
- un composant de transmission de requête (231) pour transmettre ladite requête à ladite une autre unité d'équilibrage de charge (410), et
- un composant de réception de réponse à la requête (232) pour recevoir une réponse à la requête de ladite une autre unité d'équilibrage de charge (410).

14. Unité d'équilibrage de charge pour équilibrer une charge de traitement dans un réseau selon la revendication 13, dans laquelle ledit composant de communication d'équilibreur de charge (412) comprend en outre :
- un composant pour générer un message de redirection et
- un composant pour transmettre ledit message de redirection audit client (100).

15. Unité d'équilibrage de charge pour équilibrer une charge de traitement dans un réseau selon la revendication 13 ou la revendication 14, dans laquelle ladite unité d'équilibrage de charge (410) comprend un composant d'autorisation pour autoriser ledit client (100).

16. Unité d'équilibrage de charge pour équilibrer une charge de traitement dans un réseau selon l'une quelconque des revendications 13 à 15, dans laquelle ladite unité d'équilibrage de charge base la sélection du serveur de traitement sur au moins un d'un groupe comprenant :
- une charge de serveur ou une charge de serveur relative,
- un contenu de serveur,
- une identité de client,
- une identité de serveur,
- une localisation de client, et
- une localisation de serveur.

17. Unité d'équilibrage de charge pour équilibrer une charge de traitement dans un réseau selon l'une quelconque des revendications 13 à 16, comprenant en outre :
- un composant de reconfiguration (235) pour reconfigurer une unité d'équilibrage de charge non active (210, 310) en une unité d'équilibrage de charge active (410).

18. Unité d'équilibrage de charge pour équilibrer une charge de traitement dans un réseau selon l'une quelconque des revendications 13 à 17, dans laquelle ladite unité d'équilibrage de charge comprend en outre :
- un composant de réception de requête (420) pour recevoir ladite requête d'une autre unité d'équilibrage de charge (210, 310),
- un composant de génération de réponse à la requête (421) pour générer une réponse à la requête, et
- un composant de transmission de réponse à la requête (422) pour transmettre ladite réponse à la requête à ladite une autre unité d'équilibrage de charge (210, 310).

19. Unité d'équilibrage de charge pour équilibrer une charge de traitement dans un réseau selon la revendication 18, dans laquelle ladite requête de ladite unité d'équilibrage de charge (210, 310) à ladite une autre unité d'équilibrage de charge (410) est une certaine requête d'équilibreur de charge.

20. Unité d'équilibrage de charge pour équilibrer une charge de traitement dans un réseau selon la revendication 19, dans laquelle ladite réponse à la requête de ladite une autre unité d'équilibrage de charge (410) à ladite unité d'équilibrage de charge (210, 310) est une certaine réponse à la requête d'équilibreur de charge.

21. Unité d'équilibrage de charge pour équilibrer une charge de traitement dans un réseau selon la revendication 20, dans laquelle ladite réponse à la requête d'équilibreur de charge contient en outre une information concernant au moins un d'un groupe comprenant :
- des serveurs actuellement disponibles,
- une information liée au serveur,
- des clients actuellement demandeurs,
- une information liée au client,
- des clients groupés actuels, et
- la charge des serveurs ou la charge relative des serveurs.

22. Unité d'équilibrage de charge pour équilibrer une charge de traitement dans un réseau selon l'une quelconque des revendications 13 à 21, comprenant en outre :
- un composant de redémarrage pour redémarrer une unité d'équilibrage de charge.

23. Unité d'équilibrage de charge pour équilibrer une charge de traitement dans un réseau selon l'une quelconque des revendications 13 à 22, comprenant en outre :
- un composant de reconfiguration de dispositif de réseau pour reconfigurer des dispositifs de réseau acheminant une communication de réseau.

24. Serveur incluant une unité d'équilibrage de charge pour équilibrer une charge de traitement dans un réseau selon l'une quelconque des revendications 13 à 23.

25. Système d'une pluralité de serveurs de traitement selon la revendication 24.
